(19) Europäisches Patentamt
European Patent Office
Office européen des brevets

(11) **EP 3 390 967 B1**

(12) **EUROPÄISCHE PATENTSCHRIFT**

(45) Veröffentlichungstag und Bekanntmachung des Hinweises auf die Patenterteilung:
**21.08.2019   Patentblatt 2019/34**

(21) Anmeldenummer: **16809865.5**

(22) Anmeldetag: **16.12.2016**

(51) Int Cl.:
*B64D 43/02* (2006.01)          *G05B 9/03* (2006.01)
*G01D 3/036* (2006.01)          *G01D 3/08* (2006.01)
*G01D 5/244* (2006.01)

(86) Internationale Anmeldenummer:
**PCT/EP2016/081406**

(87) Internationale Veröffentlichungsnummer:
**WO 2017/103093 (22.06.2017 Gazette 2017/25)**

(54) **VERFAHREN ZUM ÜBERWACHEN VON MINDESTENS ZWEI REDUNDANTEN SENSOREN**

METHOD FOR MONITORING AT LEAST TWO REDUNDANT SENSORS

PROCEDE DE SURVEILLANCE D'AU MOINS DEUX CAPTEURS REDONDANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2015   EP 15200994**

(43) Veröffentlichungstag der Anmeldung:
**24.10.2018   Patentblatt 2018/43**

(73) Patentinhaber: **Bayer Aktiengesellschaft**
**51373 Leverkusen (DE)**

(72) Erfinder: **KÜPPER, Achim**
**51375 Leverkusen (DE)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
WO-A1-84/00071          DE-A1- 10 242 128
DE-A1-102004 044 335    DE-A1-102011 113 316
DE-A1-102012 006 629    US-A1- 2013 226 327

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Überwachen von mindestens zwei redundanten Sensoren, die insbesondere in einer chemischen Anlage angeordnet sind. Ferner umfasst die Erfindung eine Überwachungseinrichtung zum Überwachen von mindestens zwei redundanten Sensoren z.B. in einer chemischen Anlage oder in einem Flugzeug.

DE 102 42 128 A1 offenbart eine solche Überwachungseinrichtung.

In der chemischen Industrie findet sich eine Vielzahl von chemischen Anlagen, welche aufgrund der in diesen Anlagen verarbeiteten Substanzen strengen Sicherheitsanforderungen unterliegen. Eine beispielhafte und nicht abschließende chemische Anlage ist eine Toluol-2,4-diisocyanat (TDI) Anlage. Zum Monitoring, insbesondere als Teil einer Sicherheitsrelevanten Schutzfunktion einer derartigen chemischen Anlage bzw. als Teil einer automatischen Überprüfung von wichtigen Flugparametern eines Flugzeugs über einen Autopiloten, werden Monitoringeinrichtungen und Sensoren insbesondere für die Messung von Prozessvariablen eingesetzt, um stets aktuelle Daten über den mindestens einen in einer Anlage durchgeführten (chemischen) Prozess zu erhalten. Die durch die Sensoren erfassten aktuellen Prozessdaten bzw. Prozessvariablen werden üblicherweise an eine Monitoringeinrichtung übermittelt und von dieser ausgewertet. Bei einer Auswertung kann zum Beispiel für die mindestens eine erfasste Prozessvariable ein zulässiger Wertebereich vorgegeben sein. Stellt die Monitoringeinrichtung fest, dass der von dem Sensor erfasste Wert außerhalb des zulässigen Wertebereichs liegt, kann der Prozess unterbrochen und/oder ein Alarm ausgegeben werden. Auch kann eine Regelung durchgeführt werden, um die durch den Sensor erfasste physikalische Größe auf einen Sollwert zurückzuführen. Hierdurch kann sichergestellt werden, dass beispielsweise der Austritt einer für die Umwelt schädlichen Substanz aus der chemischen Anlage zeitnah detektiert werden und ein weiterer Austritt und damit Schaden verhindert werden kann.

Eine beispielhafte weitere Anwendung von redundanten Sensoren ist in Flugzeugen. Beispielsweise werden in einem Flugzeug die für eine stabile Fluglage wichtigen Parameter überprüft. Zur Überprüfung werden Sensoren eingesetzt, um beispielsweise die Fluggeschwindigkeit zu erfassen. Die erfassten Flugparameter werden an den Autopiloten übermittelt, der beim Auftreten von Störungen gegensteuert, um die Fluglage stabil zu halten.

Ein Problem bei einem derartigen Monitoring ist jedoch, dass aufgrund eines fehlerhaften Sensors die Überprüfung selbst fehlerhaft sein kann. Mit anderen Worten kann ein korrektes Monitoring nur dann gewährleistet werden, wenn die eingesetzten Sensoren fehlerfrei funktionieren und korrekte Istwerte, also korrekte physikalische Prozessvariable, liefern. Schwierigkeiten bereitet an dieser Stelle insbesondere die Detektion eines fehlerhaften Sensors. In der Regel wird ein fehlerhafter Sensor nur dann detektiert, wenn das von dem Sensor gelieferte Sensorsignal bzw. die Messwerte von diesem Sensorsignal außerhalb des oben genannten vorgegebenen zulässigen Bereichs liegt/en und nach der Abschaltung die gesamte chemische Anlage oder nach der Landung das Flugzeug überprüft wird. Dies ist jedoch mit erheblichen Zeitverlust, Kosten und Aufwand verbunden. Ein noch größerer Schaden kann jedoch entstehen, wenn der fehlerhafte Sensor ein fehlerhaftes Sensorsignal liefert, das innerhalb des zulässigen Bereichs liegt, obwohl eine tatsächliche Prozessvariable im unzulässigen Bereich liegt. Mit anderen Worten bleibt eine Fehlfunktion beispielsweise der Austritt einer schädlichen Substanz aus einer Anlage aufgrund des fehlerhaften Sensors unerkannt.

Im Falle des Monitorings eines Flugzeugs kann beispielsweise ein Sensor wegen einer Vereisung einen fehlerhaften Geschwindigkeitsmesswert dem Autopiloten bereitstellen. Daraufhin kann es zu einem Absturz des Flugzeugs kommen. Für den Fall, dass ein fehlerhafter Sensor nicht detektiert wird, kann dies beispielsweise bedeuten, dass eine fehlerhafte Geschwindigkeitsmessung dem Autopiloten eine ausreichend hohe Fluggeschwindigkeit suggeriert, obwohl das Flugzeug in Wahrheit zu langsam ist und kurz vor dem Strömungsabriss und somit kurz vor dem Absturz steht.

Daher liegt der vorliegenden Erfindung die Aufgabe zugrunde, ein Verfahren zum Überwachen von Sensoren bereitzustellen, das eine zuverlässige Detektion eines fehlerhaften Sensors ermöglicht.

Die zuvor hergeleitete und aufgezeigte Aufgabe wird gemäß einem ersten Aspekt der Erfindung bei einem Verfahren nach Patentanspruch 1 gelöst. Das Verfahren beruht auf der Nutzung von mindestens zwei redundanten Sensoren und den computer-implementierten Vergleich der von diesen Sensoren umfassten Messsignale. Gegenstand der Anmeldung ist entsprechend ein Verfahren zum Überwachen von mindestens zwei redundanten Sensoren, die insbesondere in einer chemischen Anlage oder in einem Flugzeug angeordnet sind, umfassend folgende Schritte:

a) Bereitstellen von einem ersten Sensorsignal eines ersten Sensors der zwei redundanten Sensoren, wobei das erste Sensorsignal mindestens einen Messwert umfasst,
b) Bereitstellen von mindestens einem weiteren Sensorsignal von einem weiteren Sensor der zwei redundanten Sensoren, wobei das weitere Sensorsignal mindestens einen Messwert umfasst,
c) Erzeugen von mindestens einem ersten Analysesignal aus dem ersten Sensorsignal,
d) Erzeugen von mindestens einem weiteren Analysesignal aus dem weiteren Sensorsignal,
e) Selektion eines Horizonts für die Sensorsignale aus a), b) durch Vergleich der Analysesignal aus c) und d) mit einem vordefinierten Grenzmaß für die Streuung, die Stationarität bzw. die Dynamik des Sensorsignals,
f) Bestimmen von mindestens einer Korrelation zwischen dem ersten Analysesignal des ersten Sensors und dem Analysesignal des weiteren Sensors oder einer Differenz zwischen dem ersten Sensorsignal des ersten Sensors und dem Sensorsignal des weiteren Sensors,

g) Vergleichen der Korrelation mit mindestens einem zulässigen Korrelationsbereich oder der Differenz mit einem zulässigen Differenzbereich, und

h) Bestimmen, ob von den zwei redundanten Sensoren mindestens ein Sensor fehlerhaft ist abhängig von dem Vergleichsergebnis nach g).

Das erfindungsgemäße Verfahren wird typischerweise durch einen Computer durchgeführt, der zur Durchführung der Schritte eingerichtet ist.

Indem im Gegensatz zum Stand der Technik die Sensorsignale von zwei redundanten Sensoren ausgewertet und zumindest in Abhängigkeit der zwei entsprechenden Analysesignale mindestens eine Korrelation bzw. eine Differenz zwischen den Sensorsignalen abgeleitet wird, kann ein fehlerhafter Sensor zuverlässig detektiert werden bzw. auf ein fehlerhaftes Verhalten eines Sensors hingewiesen werden. Die Sicherheit des überwachten Prozesses kann erhöht werden. Ein fehlerhafter Sensor kann ohne großen Aufwand und damit verbundenen geringen Kosten ersetzt werden. Die Sensorsignale von drei oder mehr Sensoren können wiederum jeweils paarweise ausgewertet werden.

Unter redundanten Sensoren ist erfindungsgemäß zu verstehen, dass zu einem ersten Sensor mindestens ein weiterer (benachbarter) Sensor angeordnet ist, der zumindest eine ähnliche, vorzugsweise die gleiche Prozessvariable, messtechnisch erfasst. Eine erste Prozessvariable gilt vorliegend als ähnlich zu einer weiteren Prozessvariable, wenn die beiden Prozessvariablen ein ähnliches Verhalten bedingt durch den Prozessablauf zu einander aufweisen, z. B. eine ähnliche dynamische Änderung über der Zeit oder die erste Prozessvariable durch eine Rechnung in die weitere Prozessvariable umgerechnet werden kann (und umgekehrt).

In einer Ausführungsform kann mindestens ein Sensor eingerichtet sein, als Prozessvariable einen Druck, einen Massenstrom, eine Temperatur, eine Qualität, wie einen pH-Wert, eine Viskosität, eine Strömungsgeschwindigkeit, eine Flughöhe etc. zu erfassen. Alternativ kann es sich aber auch um eine aus Messwerten berechnete Größe handeln. Vorzugweise können die redundanten Sensoren die gleiche Prozessvariable messen. Es versteht sich, dass auch drei oder mehr redundante Sensoren vorgesehen sein können und überwacht werden können, wobei der Vergleich der Sensorsignalen, d. h. die Ermittlung der Korrelation bzw. Differenz, gemäß Schritt f) des Verfahrens dann paarweise erfolgt.

Von jedem der zumindest zwei redundanten Sensoren wird jeweils zumindest ein Sensorsignal bereitgestellt. Insbesondere kann vorgesehen sein, dass der erste Sensor ein erstes Sensorsignal an eine Überwachungseinrichtung über eine geeignete Kommunikationsverbindung liefert und der weitere Sensor ein weiteres Sensorsignal an die Überwachungseinrichtung über eine geeignete Kommunikationsverbindung liefert. Ein Sensorsignal umfasst im Sinne der Anmeldung eine Vielzahl von Messwerten, die von dem Sensor bevorzugt (nahezu) kontinuierlich über einen Zeitintervall (auch Intervall genannt) erfasst werden.

Im Sinne der Anmeldung wird für die Prüfung der Sensoren ein Horizont über eine Zeit vom aktuellen Zeitpunkt in die Vergangenheit oder über eine Anzahl von verfügbaren Messungen zur aktuellen Messung definiert. Üblicherweise wird ein Horizont über eine Zeit definiert (auch Zeithorizont genannt). In Sinne der Anmeldung kann ein Horizont ein bewegter Horizont oder ein Zeitintervall sein.

Es ist erkannt worden, dass für eine zuverlässige Auswertung bzw. Fehlerdetektion zunächst aus den mindestens zwei bereitgestellten Sensorsignalen jeweils ein Analysesignal bestimmt, insbesondere berechnet, wird. Ein Analysesignal im Sinne der Anmeldung ist ein Signal, das ein Maß für die Streuung, die Stationarität bzw. die Dynamik der/n von dem Sensor zuletzt erfassten Daten bzw. Messwerten wiedergibt.

Es ist erkannt worden, dass für eine zuverlässige Bestimmung eines fehlerhaften Sensors ein Analysesignal eine ausreichende Anzahl von Messwerten aufweisen sollte, wobei stets die aktuellsten Messwerte umfasst sein sollten. Dies kann dadurch erreicht werden, dass ein Analysesignal über einen bewegten Horizont erstellt wird. Wenn also ein neuer Messwert vorliegt, wird dieser in dem Analysesignal berücksichtigt und der älteste Messwert wird aus dem Analysesignal entfernt.

Darüber hinaus ist erkannt worden, dass die Definition oder Selektion des Horizonts für die Qualität der Prüfung entscheidend ist. Erfindungsgemäß erfolgt daher im Schritt e) eine Selektion eines Horizonts für die Sensorsignale aus a), b) durch Vergleich der Analysesignal aus c) und d) mit einem vordefinierten Grenzmaß für die Streuung, die Stationarität bzw. die Dynamik des Sensorsignals.

Um mindestens einen fehlerhaften Sensor zu bestimmen, wird eine Korrelation zwischen den zumindest zwei Analysesignalen oder eine Differenz zwischen Sensorsignalen von zwei redundanten Sensoren über den Horizont bestimmt bzw. ermittelt. Es ist auch möglich eine Korrelation direkt (ohne Berechnung von Analysesignalen aus den Sensorsignalen) zwischen den zumindest zwei Sensorsignalen über den Horizont aufzustellen mit dem Nachteil, dass, wenn die Korrelation klein ist, die Zuverlässigkeit des Verfahrens geringer ist. Die mindestens eine bestimmte Korrelation oder Differenz wird dann mit einem (vorgebbaren) zulässigen Korrelations-bzw. Differenzbereich verglichen. Es versteht sich, dass insbesondere bei einer Mehrzahl von unterschiedlichen Korrelationen bzw. Differenzen entsprechende unterschiedliche zulässige Korrelationsbereiche bzw. Differenzbereiche vorgesehen sein können. Ein zulässiger Korrelationsbereich kann sich auch implizit durch einen explizit angegebenen unzulässigen Korrelationsbereich und/oder mindestens einen Grenzwert ergeben. Dies gilt auch für ein Differenzbereich.

Zur Detektion bzw. Bestimmung eines fehlerhaften Sensors wird die bestimmte Korrelation bzw. die Differenz mit einem zulässigen Korrelations- bzw. Differenzbereich verglichen. Für den Fall, dass die Korrelation bzw. die Differenz im zulässigen Bereich liegt, liegt kein fehlerhafter Sensor vor. Für den Fall, dass die Korrelation bzw. die Differenz nicht im zulässigen Bereich liegt, liegt ein fehlerhafter Sensor vor. Dann kann beispielsweise ein Alarm ausgegeben werden. Zum Beispiel können dann Maßnahmen zur Behebung des Fehlers, wie ein Austausch des Sensors, (auch automatisch) eingeleitet werden. Um einen Fehlalarm zu vermeiden, wird vorzugsweise das Vergleichsergebnis in mindestens einem Überprüfungsschritt verifiziert. Beispielsweise kann vorgesehen sein, dass zunächst eine Warnung ausgegeben wird und erst bei mehrmaliger Detektion (z.B. dreimal) eines Verlassens des zulässigen Korrelations- bzw. Differenzbereichs ein Alarm ausgegeben wird.

Es ist erkannt worden, dass unterschiedliche Fehler auftreten können. Beispielhafte und nicht abschließende Fehler und damit fehlerhafte Sensoren, die durch erfindungsgemäße Ausführungsformen detektiert werden können, sind Offset-Fehler, Freezing-Fehler und/oder Fouling-Fehler. Vorliegend ist unter einem Offset-Fehler eine konstante Ungenauigkeit der Messwerte eines Sensors gegenüber den Messwerten des anderen Sensors der zumindest zwei redundanten Sensoren zu verstehen. Die konstante Abweichung in den Messwerten zwischen den redundanten Sensoren kann als stationäre Ungenauigkeit eines Sensors interpretiert werden. Freezing bezeichnet vorliegend das Einfrieren eines Sensorsignals. Mit anderen Worten kann das betreffende Sensorsignal stets einen konstanten (fehlerhaften) Wert anzeigen, während der andere Sensor den dynamischen Verlauf der gemessenen Prozessvariable (richtig) anzeigen kann. Unter Fouling wird vorliegend insbesondere eine zeitliche Verzögerung des dynamischen Verhaltens des Messsignals des einen Sensors relativ zum Messsignal des anderen Sensors der zumindest zwei redundanten Sensoren verstanden. Beispielsweise kann dies durch eine Verschmutzung eines Sensors, wie eine Verkrustung, verursacht werden. Die Verschmutzung kann zu einer (dynamischen) Trägheit des Sensors führen.

In einer ersten Ausführungsform des Verfahrens wird als Analysesignal eine berechnete Standardabweichung des jeweiligen Sensorsignals zu einem Mittelwert über einen bewegten Horizont verwendet. Eine Standardabweichung ist ein (gutes) Maß für die Streuung, die Stationarität bzw. die Dynamik der gemessenen Daten bzw. der Messwerte des Sensorsignals.

Um insbesondere einen Offset-Fehler zu detektieren wird im Schritt e) des Verfahrens die Standardabweichung jedes Sensorsignals als Analysesignal herangezogen. Es wird geprüft, ob für jedes Sensorsignal das Maß für die Dynamik des aktuellen Messdatenpunktes (mit anderen Worten das Analysesignal) über ein Horizont hinreichend klein ist, das heißt, ob der Prozess stationär ist. Typischerweise wird die Stationarität des Sensorsignals über einen bewegten Zeithorizont (auch bewegter Horizont genannt) ermittelt. Wenn die Standardabweichung des ersten Sensorsignals und die Standardabweichung des weiteren Sensorsignals jeweils für den gleichen Zeitraum bzw. Zeitpunkte eine zulässige bzw. hinreichende Stationarität aufweisen, also beispielsweise einen entsprechenden Grenzwert nicht übersteigen, sind die Daten bzw. Messwerte ausreichend ruhig für eine Offset-Fehler Detektion. Andernfalls besteht die Gefahr aufgrund kurzfristiger Dynamiken z.B. im chemischen Prozess oder in der Geschwindigkeit eines Flugzeugs, dass eine Meldung eines de facto nicht vorhandenen Offset-Fehlers als Fehlalarm erfolgt. Ein bewegter Horizont eines Analysesignals für die Offsetprüfung beträgt typischerweise wenige Minuten. Weisen die Messdatenpunkte der beiden Sensoren jeweils nur eine kleine Dynamik über den bewegten Horizont auf, werden nach Schritt f) des Verfahrens entweder die Differenz der Messsignale (eine Reihe von Mess-Datenpunkte) oder lediglich die Differenz der aktuellen Messdatenpunkte beider Sensoren berechnet - auch Offsetwert genannt - und mit einem maximalen Offsetgrenzwert verglichen. Abhängig von dem Vergleichsergebnis kann bestimmt werden, ob ein fehlerhafter Sensor vorliegt. Ergibt der Vergleich, dass die bestimmte Differenz nicht in einem zulässigen (vorgebbaren) Differenzbereich oder unterhalb einem Differenzgrenzwert liegt, kann aus diesem Vergleichsergebnis abgeleitet werden, dass ein Offset-Fehler vorliegt. Mit anderen Worten kann in einfacher und zuverlässiger Weise abhängig vom Vergleichsergebnis bestimmt werden, ob ein fehlerhafter Sensor vorliegt oder nicht.

In weitere Ausführungsformen umfasst das erfindungsgemäße Verfahren typischerweise eine Freezing- und / oder eine Fouling-prüfung mit folgenden Schritten:

In den Schritten c) und d) dieser Prüfungen werden die Standardabweichungen und die erste und /oder zweite Ableitung jedes Sensorsignals über der Zeit als Analysesignale des jeweiligen Sensorsignals erzeugt/berechnet. Im Schritt e) wird ein passender Horizont für die jeweilige Prüfung, typischerweise ein Prüfungsintervall (auch Intervall genannt), ermittelt, in dem die erfassten Messdatenpunkte jedes Sensorsignals ein dynamisches Verhalten aufweisen. Als Datenpunkte mit einem dynamischen Verhalten werden hier Datenpunkte bezeichnet, die lokal (relativ zu den benachbarten Datenpunkten) weder stationär noch durch einen konstanten Trend charakterisiert sind, d.h. es wird ein Prüfungsintervall ermittelt, in dem der Gradient (erste Ableitung) des jeweiligen Sensorsignals über der Zeit im dem Prüfungsintervall hinreichend variiert. Dies ist der Fall, wenn der Betrag der berechneten zweiten Ableitung des jeweiligen Sensorsignals hinreichend groß ist (oberhalb eines Grenzwertes). Dies wird im Folgenden als dynamisches Verhalten bezeichnet.

Zeigt das Sensorsignal hingegen ein nicht-dynamisches Verhalten, so werden neue Messdatenpunkte dem betrachteten Prüfungsintervall hinzugefügt, bis es eine vorgegebene Mindestanzahl von dynamischen Messdatenpunkten umfasst.

Für die Freezing-Prüfung werden dann im Schritt f) die Analysesignale aus c) und d) für die Prüfung herangezogen und ein Differenzsignal ($\Delta$A) aus dem ersten Analysesignal (A1) und dem weiteren Analysesignal (A2) bestimmt. Bevorzugt werden im Schritt f) jeweils die Standardabweichungen der Sensorsignale als Analysesignale herangezogen. Zur Freezing-Prüfung können als Analysesignale allerdings auch die Sensorsignale direkt oder deren Ableitungen herangezogen werden. Dann wird eine erste Kreuzkorrelation Cov(AI, $\Delta$A) zwischen dem bestimmten Differenzsignal und dem ersten Analysesignal bestimmt. Eine weitere Kreuzkorrelation Cov(A2, $\Delta$A) wird zwischen dem bestimmten Differenzsignal und dem weiteren Analysesignal bestimmt. Dann wird das Verhältnis der ersten Kreuzkorrelation zu der weiteren Kreuzkorrelation bestimmt. Im Schritt g) wird dieses Verhältnis mit einem zulässigen Korrelationsbereich, insbesondere einem zulässigen (vorgebbaren) Verhältnisbereich verglichen. Unterscheiden sich die Kreuzkorrelationen um Größenordnungen, d. h. befindet sich das berechnete Verhältnis außerhalb eines vorgegeben Verhältnisbereichs, liegt Freezing vor und der fehlerhafte Sensor kann bestimmt werden. Wenn der Betrag der Kreuzkorrelation Cov(AI, $\Delta$A) kleiner ist als die andere Kreuzkorrelation Cov(A2, $\Delta$A), dann ist Sensor 1 von Freezing betroffen bzw. umgekehrt.

Für eine Fouling-Prüfung gemäß einer besonderen Ausführungsform des erfindungsgemäßen Verfahrens umfasst das Bestimmen von mindestens einer Korrelation (Schritt f) des Verfahrens) das Maximieren der Kreuzkorrelation zwischen dem ersten Analysesignal und dem weiteren Analysesignal über unterschiedliche Zeitverschiebungen ($\Delta$T). Hierfür wird typischerweise die Kovarianz Cov (A1, A2 ($\Delta$ T)) zwischen dem ersten Analysesignal und dem weiteren Analysesignal über dem Prüfungsintervall durch eine Zeitverschiebung A2($\Delta$ T) des weiteren Analysesignals maximiert. Mit anderen Worten wird im Schritt f) als Korrelation eine Verzögerungszeit - auch Foulingzeit genannt - zwischen den beiden Sensorsignalen berechnet. Die Foulingzeit wird mit einem zulässigen Verzögerungszeitgrenzwert verglichen. Ist die Foulingzeit über einen maximalen zulässigen Grenzwert liegt ein fehlerhafter Sensor vor. Bevorzugt werden im Schritt f) jeweils die Standardabweichungen der Sensorsignale als Analysesignale herangezogen. Zur Fouling-Prüfung können als Analysesignale auch die Sensorsignale direkt oder deren Ableitungen herangezogen werden.

Bei den zumindest zwei zu überwachenden Sensoren handelt es sich um redundante Sensoren. Diese können beispielsweise in unmittelbarer Nähe zueinander in einer Vorrichtung einer chemischen Anlage angeordnet sein. Beispielsweise können sie direkt aneinander grenzen und/oder ein gemeinsames Gehäuse oder dergleichen umfassen. Gemäß einer Ausführungsform können die redundanten Sensoren auch beabstandet voneinander angeordnet sein. Beispielsweise können sich ein erster Sensor am Anfang einer Fluidleitung und ein weiterer Sensor am Ende einer Fluidleitung befinden. Bei einem anderen Beispiel kann zwischen den beiden Sensoren ein Apparat sein oder die Sensoren in unterschiedlichen, nacheinander angeordneten Apparaten, angeordnet sein. Diese strukturelle Beziehung zwischen dem ersten und dem weiteren Sensor kann gemäß einer weiteren Ausführungsform bestimmt werden. Beispielsweise kann diese Bestimmung bei der Installation der Sensoren (einmalig) erfolgen. In einem Vorverarbeitungsschritt kann mindestens eines der bereitgestellten Sensorsignale abhängig von der strukturellen Beziehung der Sensoren zeitlich bearbeitet werden. Insbesondere können hierdurch (bekannte) anlagenbedingte Verzögerungen zwischen dem ersten Sensorsignal und dem weiteren Sensorsignal berücksichtigt werden. Dies ermöglicht die Detektion eines fehlerhaften Sensors von mindestens zwei redundanten Sensoren, auch wenn die Sensoren nicht unmittelbar benachbart, sondern voneinander beabstandet angeordnet sind.

Gemäß einer bevorzugten Ausführungsform kann mindestens eines der bereitgestellten Sensorsignale mit einem Verzögerungselement erster Ordnung abhängig von der strukturellen Beziehung der Sensoren zeitlich bearbeitet werden. Zusätzlich oder alternativ kann mindestens eines der bereitgestellten Sensorsignale mit einem Totzeitelement abhängig von der strukturellen Beziehung der Sensoren zeitlich bearbeitet werden. Insbesondere ist erkannt worden, dass verfahrenstechnische Apparate, die zwischen zwei redundanten Sensoren angeordnet sind, durch ein Verzögerungselement erster Ordnung (PT1) oder höherer Ordnung (PTn) oder durch ein Totzeitelement (PTt) beschrieben werden können. Wenn es sich bei dem dynamischen Verhalten des verfahrenstechnischer Apparats um ein Totzeitelement (PTt) handelt, kann das nachgelagerte Messsignal über eine zeitliche Verschiebung verzögert werden.

Um die der Fehlerdetektion zugrunde liegende Datenqualität zu verbessern, kann gemäß einer weiteren Ausführungsform vorgesehen sein, dass vor dem Bestimmen des ersten Analysesignals und/oder des weiteren Analysesignals in einem Filterschritt mindestens eines der erfassten Sensorsignale (vorverarbeitet) gefiltert wird z.B. mit einem gewöhnlichen Tiefpassfilter, derart, dass Messrauschen aus dem (entsprechenden) Sensorsignal herausgefiltert wird. Dieser Filterschritt kann entfallen, sofern das Rauschen normalverteilt ist.

Ein weiterer Aspekt der Erfindung ist eine Überwachungseinrichtung zum Überwachen von mindestens zwei redundanten Sensoren, die insbesondere in einer chemischen Anlage angeordnet sind. Die Überwachungseinrichtung umfasst mindestens eine Empfangseinrichtung eingerichtet zum Empfangen von einem ersten Sensorsignal eines ersten Sensors der zwei redundanten Sensoren und zum Empfangen von mindestens einem weiteren Sensorsignal von einem weiteren Sensor der zwei redundanten Sensoren. Das erste Sensorsignal umfasst mindestens einen Messwert und das weitere Sensorsignal umfasst mindestens einen Messwert. Die Überwachungseinrichtung umfasst mindestens eine Verarbeitungseinrichtung eingerichtet zum Erzeugen von einem ersten Analysesignal aus dem ersten Sensorsignal und zum Erzeugen von mindestens einem weiteren Analysesignal aus dem weiteren Sensorsignal. Die Verarbeitungseinrichtung ist zum Bestimmen von mindestens einer Korrelation zwischen dem ersten Analysesignal des ersten Sensors und dem Analysesignal des weiteren Sensors oder einer Differenz zwischen dem ersten Sensorsignal des ersten Sensors und dem Sensorsignal des weiteren Sensors eingerichtet. Die Überwachungseinrichtung umfasst mindestens eine Vergleichseinrichtung eingerichtet zum Vergleichen der Korrelation bzw. Differenz mit mindestens einem zulässigen Korrelations- bzw. Differenzbereich oder -grenze. Die Überwachungseinrichtung umfasst mindestens eine Auswerteeinrichtung eingerichtet zum Bestimmen, ob mindestens ein Sensor fehlerhaft ist abhängig von dem Vergleichsergebnis.

Die Überwachungseinrichtung ist insbesondere zur Durchführung des oben beschriebenen Verfahrens geeignet.

Ein noch weiterer Aspekt der Erfindung ist eine chemische Anlage umfassend mindestens zwei redundante Sensoren und mindestens eine zuvor beschriebene Überwachungseinrichtung.

Ein noch weiterer Aspekt der Erfindung ist ein Flugzeug umfassend mindestens zwei redundante Sensoren und mindestens eine zuvor beschriebene Überwachungseinrichtung.

Die Merkmale der Verfahren, Vorrichtungen und Anlagen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die erfindungsgemäße Überwachungseinrichtung, das erfindungsgemäße Verfahren und die erfindungsgemäße chemische Anlage auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1    eine schematische Teilansicht eines Ausführungsbeispiels einer chemischen Anlage gemäß der vorliegenden Erfindung;

Fig. 2    eine schematische Teilansicht eines weiteren Ausführungsbeispiels einer chemischen Anlage gemäß der vorliegenden Erfindung;

Fig. 2a    eine schematische Teilansicht eines Ausführungsbeispiels eines Flugzeugs gemäß der vorliegenden Erfindung;

Fig. 3    eine schematische Ansicht eines Ausführungsbeispiels einer Überwachungseinrichtung gemäß der vorliegenden Erfindung;

Fig. 4    ein Diagramm eines Ausführungsbeispiels eines Verfahrens gemäß der vorliegenden Erfindung;

Fig. 5    ein beispielhaftes Diagramm mit Verläufen von Sensorsignalen;

Fig. 6    ein weiteres beispielhaftes Diagramm mit Verläufen von Analysesignalen; und

Fig. 7    ein weiteres beispielhaftes Diagramm mit Verläufen von Analysesignalen.

Nachfolgend werden gleiche Bezugszeichen für gleiche Elemente verwendet.

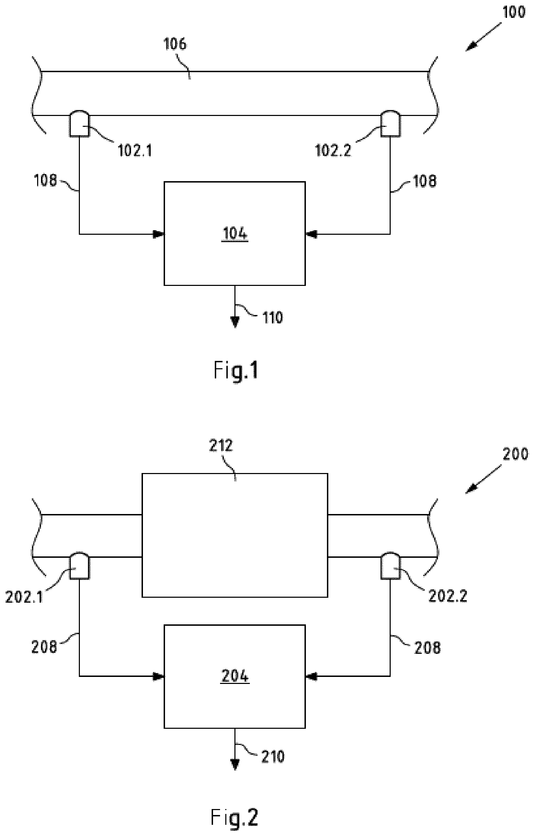

Die Figur 1 zeigt eine schematische Teilansicht eines Ausführungsbeispiels einer chemischen Anlage 100 gemäß der vorliegenden Erfindung. Insbesondere ist in dem vorliegenden Ausführungsbeispiel ein Teil einer Fluidleitung 106 einer chemischen Anlage 100 abgebildet. Durch die Fluidleitung 106 fließt ein Fluid, welches durch redundante Sensoren 102.1, 102.2 überwacht werden kann.

In der Fluidleitung 106 sind vorliegend zwei redundante Sensoren 102.1, 102.2 angeordnet. Im Vorliegenden Ausführungsbeispiel weisen die Sensoren 102.1, 102.2 einen Abstand zueinander auf. Diese strukturelle Beziehung zwischen den Sensoren 102.1, 102.2 kann bei der Detektion eines fehlerhaften Sensors 102.1, 102.2 berücksichtigt werden, wie nachfolgend ausgeführt werden wird. Die Sensoren 102.1, 102.2 können aber auch direkt nebeneinander angeordnet sein. Ferner sind die redundanten Sensoren 102.1, 102.2 dazu eingerichtet, zumindest eine ähnliche Prozessvariable zu messen. Beispielsweise kann es sich bei der Prozessvariable um die Temperatur des Fluids, dem Druck innerhalb der Fluidleitung 106, die Durchflussmenge, den pH-Wert des Fluids, etc. handeln.

Das erste Sensorsignal von dem ersten Sensor 102.1 kann über eine Kommunikationsverbindung 108 einer Überwachungseinrichtung 104 zur Verfügung gestellt werden. Ein weiteres Sensorsignal kann von dem weiteren Sensor 102.2 über eine Kommunikationsverbindung 108 der Überwachungseinrichtung 104 zur Verfügung gestellt werden. Jedes Sensorsignal kann aus einer Mehrzahl von Messwerten gebildet werden. Die Überwachungseinrichtung 104 ist insbesondere eingerichtet, einen fehlerhaften Sensor 102.1, 102.2 zu detektieren. Bei Detektion eines fehlerhaften Sensors 102.1, 102.2 kann eine entsprechende Information über einen Ausgang 110 von der Überwachungseinrichtung 104 ausgegeben werden.

Die Überwachungseinrichtung 104 kann zumindest Teil einer Rechenvorrichtung umfassend Prozessormittel, Speichermittel, etc. sein.

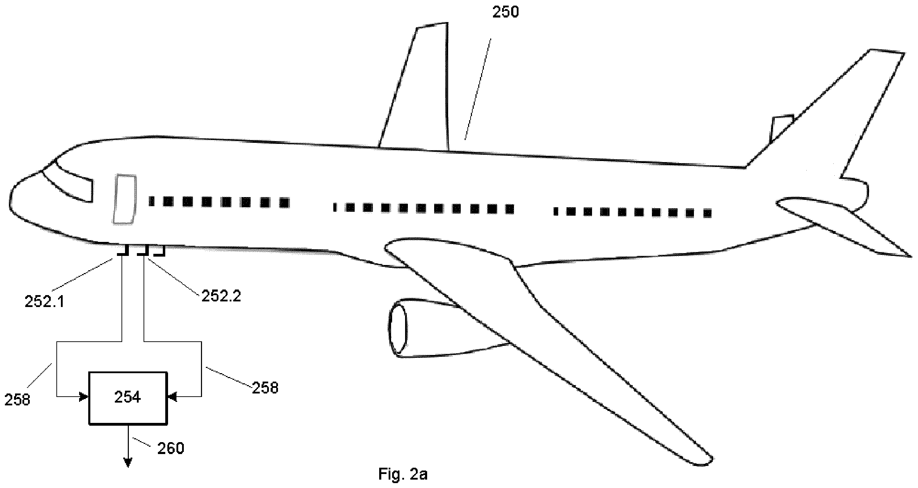

Die Figur 2 zeigt eine schematische Teilansicht eines weiteren Ausführungsbeispiels einer chemischen Anlage 200 gemäß der vorliegenden Erfindung. In diesem Ausführungsbeispiel ist im Vergleich zum obigen Ausführungsbeispiel ein zwischen den redundanten Sensoren 202.1 und 202.2 angeordneter chemischer Apparat 212 vorgesehen. Der chemische Apparat 212 kann zum Verarbeiten einer Substanz oder eines Fluids eingerichtet sein. Auch diese strukturelle Beziehung zwischen den redundanten Sensoren 202.1 und 202.2 kann bei einer Detektion eines fehlerhaften Sensors 202.1, 202.2 Berücksichtigung finden. Die jeweiligen Sensorsignale des ersten und des weiteren Sensor 202.1, 202.2 können an eine Überwachungseinrichtung 204 geliefert werden.

Die Figur 2a zeigt eine schematische Teilansicht eines Ausführungsbeispiels eines Flugzeugs 250 gemäß der vorliegenden Erfindung. Die Geschwindigkeit des Flugzeugs wird vorliegend durch die Sensoren 252.1, 252.2 überwacht. Das erste Sensorsignal von dem ersten Sensor 252.1 kann über eine Kommunikationsverbindung 258 einer Überwachungseinrichtung 254 zur Verfügung gestellt werden. Ein weiteres Sensorsignal kann von dem weiteren Sensor 252.2 über eine Kommunikationsverbindung 258 der Überwachungseinrichtung 254 zur Verfügung gestellt werden. Jedes Sensorsignal kann aus einer Mehrzahl von Messwerten gebildet werden. Die Überwachungseinrichtung 254 ist insbesondere eingerichtet, einen fehlerhaften Sensor 252.1, 252.2 zu detektieren. Bei Detektion eines fehlerhaften Sensors 252.1, 252.2 kann eine entsprechende Information über einen Ausgang 260 von der Überwachungseinrichtung 254 ausgegeben werden.

Nachfolgend wird ein Ausführungsbeispiel einer Überwachungseinrichtung 104, 204, 254 näher erläutert.

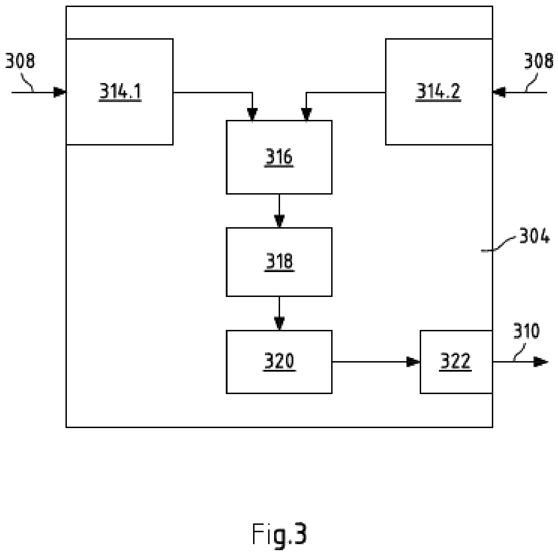

Die Figur 3 zeigt eine schematische Ansicht eines Ausführungsbeispiels einer Überwachungseinrichtung 304 gemäß der vorliegenden Erfindung. Wie zu erkennen ist, weist die Überwachungseinrichtung 304 vorliegend eine erste Empfangseinrichtung 314.1 eingerichtet zum Empfangen eines ersten Sensorsignals und eine weitere Empfangseinrichtung 314.2 eingerichtet zum Empfangen eines weiteren Sensorsignals auf. Es versteht sich, dass auch eine gemeinsame Empfangseinrichtung vorgesehen sein kann.

Vorliegend werden die beiden Sensorsignale einer Verarbeitungseinrichtung 316 bereitgestellt. Die Verarbeitungseinrichtung 316 ist dazu eingerichtet, ein erstes Analysesignal aus dem ersten Sensorsignal zu erzeugen und zumindest ein weiteres Analysesignal aus dem weiteren Sensorsignal zu erzeugen. Ferner ist die Verarbeitungseinrichtung 316 zum Bestimmen von mindestens einer Korrelation zwischen dem ersten Analysesignal des ersten Sensors und dem Analysesignal des weiteren Sensors oder einer Differenz zwischen dem ersten Sensorsignal des ersten Sensors und dem Sensorsignal des weiteren Sensors eingerichtet.

Die Korrelation bzw. die Differenz kann einer Vergleichseinrichtung 318 zur Verfügung gestellt werden, die für den Vergleich mit mindestens einem zulässigen (vorgegebenen) Korrelationsbereich bzw. Differenzbereich oder - Grenze eingerichtet ist. Das Vergleichsergebnis kann einer Auswerteeinrichtung 320 zur Verfügung gestellt werden. Die Auswerteeinrichtung 320 ist eingerichtet zum Bestimmen, ob mindestens ein Sensor fehlerhaft ist. Diese Bestimmung erfolgt abhängig von dem Vergleichsergebnis. Stellt die Auswerteeinrichtung 320 fest, dass zumindest einer der überwachten Sensoren fehlerhaft arbeitet, kann sie dies an eine Ausgabeeinrichtung 322 weiterleiten, um beispielsweise über einen Ausgang 310 eine Warnung und/oder einen Alarm auszugeben.

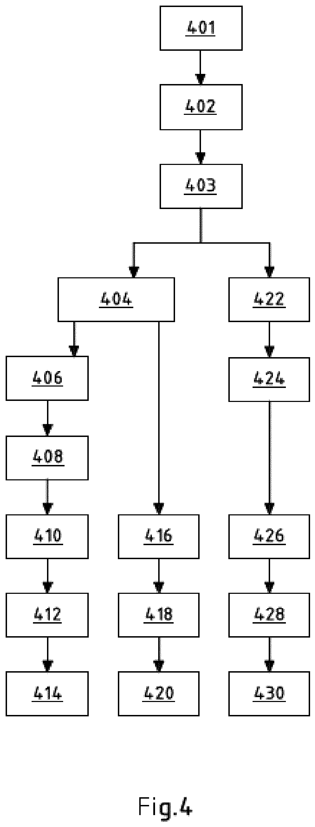

Die zuvor beschriebene Überwachungseinrichtung der chemischen Anlage oder des Flugzeugs wird nachfolgend mit Hilfe der Figur 4 näher beschrieben. Die Figur 4 zeigt ein Diagramm eines Ausführungsbeispiels eines Verfahrens gemäß der vorliegenden Erfindung. Für die folgenden Ausführungen sei angemerkt, dass die Sensoren mit dem Index s und der Messwert eines Sensors mit m bezeichnet sind.

In einem ersten Schritt 401 wird von den zumindest zwei redundanten Sensoren jeweils ein Sensorsignal zur Verfügung gestellt. Insbesondere empfängt eine Überwachungseinrichtung zumindest ein erstes Sensorsignal eines ersten Sensors und ein weiteres Sensorsignal eines weiteren Sensors. Der weitere Sensor bildet eine Referenz für den zu untersuchenden ersten Sensor.

Der erste Sensor ist im Gegenzug die Referenz für den weiteren Sensor. Somit können immer zumindest zwei Sensoren gemeinsam als Sensorpaar untersucht werden. Eine Detektion eines Fehlers kann dann dieses Sensorpaar betreffen. Der Fehler ist insbesondere als relativer Fehler zu interpretieren. Ein detektierter Fehler kann somit entweder als positiver Fehler für den einen Sensor oder als negativer Fehler für den anderen Sensor interpretiert werden.

In einem optionalen nächsten Schritt 402 können strukturelle Beziehungen zwischen den redundanten Sensoren, insbesondere anlagebedingte Verzögerungen zwischen dem ersten Sensorsignal und dem weiteren Sensorsignal, berücksichtigt werden. Eine anlagenbedingte Verzögerung kann beispielsweise aus der unterschiedlichen Messpositionierung des ersten Sensors z.B. an einem ersten Ende einer Fluidleitung und einem weiteren Sensor z.B. an dem weiteren Ende der Fluidleitung resultieren (vgl. Fig. 1). Ein weiteres Beispiel ist, dass ein erster Sensor vor einem chemischen Apparat und ein weiterer Sensor nach dem chemischen Apparat angeordnet ist (vgl. Fig. 2).

Vorzugsweise kann in dem Schritt 402 die strukturelle Beziehung bzw. das hieraus resultierende dynamische Verhalten (grob) durch ein Verzögerungselement erster Ordnung (PT1) und/oder durch ein Totzeitelement (PTt) beschrieben werden. In den oben genannten Beispielen kann der vorgelagerte Sensor mit dem Verzögerungselement erster Ordnung (PT1) oder höherer Ordnung (PTn) oder durch das Totzeitelement (PTt) verzögert werden, um insbesondere zu erreichen, dass die Messungen beider Sensoren durch dieselbe zeitlich angepasste Prozess-Dynamik charakterisiert sind. Dies erlaubt eine zuverlässigere Analyse des Sensorverhaltens.

Mit Hilfe einer Volumenstrommessung $\dot{V}$ zwischen den beiden Messpositionen kann die Zeitkonstante $T_{delay}$ als Verzögerungszeit zwischen den beiden Messpositionen des ersten und weiteren Sensors berechnet werden.

$$T_{delay} = \frac{V}{\dot{V}} \, , \qquad (1)$$

wobei V das als bekannt angenommene Volumen einer Fluidleitung oder das Füllvolumen des chemischen Apparats oder dergleichen ist.

Wenn es sich bei dem dynamischen Verhalten des zwischen den Messpositionen befindlichen Apparats um ein Verzögerungselement erster Ordnung (PT1) handelt, kann das vorgelagerte Messsignal zeitlich insbesondere über einen PT1 Filter verzögert werden:

$$m(t_k) = \frac{T_{delay}}{T_{samp} + T_{delay}} m(t_{k-1}) + \frac{T_{delay}}{T_{samp} + T_{delay}} m_{orig}(t_k) \, , \qquad (2)$$

wobei $m_{orig}$ der ursprüngliche Messwert und $T_{samp}$ die Abtastzeit zwischen den gemessenen Messwerten bzw. Datenpunkten ist und $t_k$ den aktuellen Zeitpunkt bezeichnet.

Allgemein kann die Filterung des Messsignals wie folgt formuliert werden:

$$m(t_k) = filter(m(t_{k-1}), m_{orig}, T_{delay}, T_{samp}) \, . \qquad (3)$$

Wenn es sich bei dem dynamischen Verhalten des zwischen den Messpositionen befindlichen Apparats um ein Totzeitelement (PTt) handelt, kann vorzugsweise das nachgelagerte Messsignal über eine zeitliche Verschiebung verzögert werden

$$m(t_k) = m_{orig}(t_k - T_{delay}) \, , \qquad (4)$$

wobei $m_{orig}$ der ursprüngliche Messwert ist.

Es versteht sich, dass dieser Schritt 402 entfallen kann, wenn zwischen den Sensoren aufgrund einer im Wesentlichen gleichen Messposition keine strukturellen Beziehungen zu berücksichtigen sind, wie anlagenbedingten Verzögerungen.

In einem optionalen Schritt 403 können die Sensorsignale zur Verbesserung der Signalqualität gefiltert werden. Beispielsweise kann vorgesehen sein, das erste und/oder das weitere Sensorsignal über einen Filter, wie einen Filter erster Ordnung PT1, vorzuverarbeiten, um Messrauschen und/oder kurzfristige Dynamiktrends herauszufiltern:

$$m_f(t_k) = \frac{T_{fil}}{T_{samp} + T_{fil}} m_f(t_{k-1}) + \frac{T_{fil}}{T_{samp} + T_{fil}} m(t_k) \, , \qquad (5)$$

wobei $m(t_k)$ die Messung des jeweiligen Sensors zum Zeitpunkt $t_k$, $m_f(t_k)$ die gefilterte Messung, $T_{fil}$ die Filterzeit, und $T_{samp}$ die Abtastzeit der Messung (z.B. im Prozessleitsystem oder im separaten Analyse-Rechner) ist.

Allgemein kann die Filterung des Messsignals wie folgt formuliert werden:

$$m_f(t_k) = filter(m_f(t_{k-1}), m(t_k), T_{fil}, T_{samp}) \, . \qquad (6)$$

Im Anschluss an die optionalen Schritte 402 und 403 kann in dem Schritt 404 aus dem ersten Sensorsignal ein erstes Analysesignal, vorzugsweise eine Standardabweichung, und dem weiteren Sensorsignal ein weiteres Analysesignal, vorzugsweise eine Standardabweichung, erzeugt, insbesondere berechnet werden. Wie bereits beschrieben wurde, können die Sensorsignale in den Schritten 402 und 403 vorverarbeitet worden sein. Beispielsweise kann dann in Schritt 404 die Standardabweichung $x(t_k)$ bzw. $std(t_k)$ des gefilterten Sensorsignals über einen bewegten Horizont berechnet werden:

$$x(t_k) = std(t_k) = \sqrt{\frac{1}{n-1}\sum_{i=1}^{n}(m_f(t_{k-i+1} - \overline{m_f}(t_k))^2} \ , \qquad (7)$$

wobei $\overline{m_f}(t_K)$ ein Durchschnittswert ist, der wie folgt berechnet werden kann:

$$\overline{m_f}(t_K) = \frac{1}{n}\sum_{i=1}^{n}m_f(t_{k-i+1}) \ . \qquad (8)$$

Der bewegte Horizont berücksichtigt insbesondere die Datenpunkte bzw. Messwerte der letzten n Datenpunkte ab dem gegenwärtigen Zeitpunkt. Wie der Name schon sagt, wandert der bewegte Horizont mit fortlaufender Zeit insbesondere mit der Echtzeit mit. Ist ein neuer Messwert verfügbar, fällt der letzte Datenpunkt aus dem Horizont heraus, die verbleibenden Datenpunkte werden um einen Zeitschritt nach hinten verschoben und der aktuelle Datenpunkt mit dem neuen Messwert kommt hinzu. Allgemein kann die Berechnung des Analysesignals ((7) und (8)) wie folgt formuliert werden:

$$x(t_k) = std(t_k) = std(filter(m_f(t_k),...,m_f(t_{k-n+1})) \ . \qquad (9)$$

In Schritt 404 können insbesondere Analysesignale erzeugt werden, welche als Ausgangspunkt für die Detektion eines Offset-Fehlers und/oder eines Freezing-Fehlers besonders geeignet sind. Insbesondere ist erkannt worden, dass für eine zuverlässige Detektion eines Offset-Fehlers und/oder eines Freezing-Fehlers ein Analysesignal mit weniger Datenwerten als bei der Detektion eines Fouling-Fehlers erforderlich ist. Für die nachfolgend beschriebene Offset- und Freezing-Berechnung kann das Analysesignal $x(t_k)$ über einem relativen kurzen Horizont n ausgewertet werden. Die Überwachung der Sensoren kann also zeitnah zum Auftreten von möglichen Offset und Freezing Fehlern erfolgen, während die Überwachung von Fouling Fehlern einen größeren Horizont erfordern kann und Fouling Fehler daher nur verzögert detektiert werden können. Für die Offsetberechnung kann es insbesondere ausreichen, wenn sich der Prozess kurzfristig beruhigt. Auch die Freezing-Berechnung basierend auf Analysesignalen mit relativ kurzem Horizont funktioniert hinreichend robust. Für eine robuste Fouling-Berechnung sind die langfristigen Dynamik Trends wichtiger, so dass hier ein separates Analysesignal $x(t_k)$ über einem längeren Horizont n in einem Schritt 422 bestimmt werden kann, wie nachfolgend beschrieben werden wird.

Um einen Offset-Fehler zu detektieren, kann in einem optionalen Schritt 406 mindestens eine anlagenbedingte Prozessabweichung berücksichtigt werden. Insbesondere kann ein Korrekturwert $\Delta m_{correction}$ bestimmt werden, der die mindestens eine anlagenbedingte Prozessabweichung berücksichtigt. Der Korrekturwert $\Delta m_{correction}$ kann insbesondere dann benötigt werden, wenn sich die Prozesswerte der Messung $m_2$ an dem weiteren Sensor anlagenbedingt von den Prozesswerten der Messung $m_1$ an dem vorgelagerten ersten Sensor unterscheiden. Der Korrekturwert kann bekannt sein und insbesondere vorgegeben werden.

In einem nächsten optionalen Schritt 408 kann überprüft werden, ob die Analysedaten (der Analysesignale) für eine Offsetprüfung hinreichend ruhig sind. Jede chemische Anlage unterliegt (durchgehend) dynamischen Veränderungen, die z.B. durch Störungen oder Sollwertänderungen hervorgerufen werden können. Mit anderen Worten wird eine chemische Anlage nicht durchgehend stationär gefahren. Auch wenn die Sensoren benachbart angeordnet sind, befinden sich die zu untersuchenden Sensoren nicht exakt an derselben Stelle in der chemischen Anlage. Dies führt zu einer durch die Anlage bedingte zeitliche Verzögerung zwischen den physikalischen Variablen, die durch die beiden Sensoren erfasst werden. Diese kurzfristigen dynamischen Änderungen, beispielsweise aufgrund von Störungen oder Sollwertänderungen, lassen sich nicht vorab vorhersehen und daher auch nicht entsprechend dem Schritt 402 oder in ähnlicher Weise herausfiltern. Dennoch sind sie bei der Offset-Detektion zu berücksichtigen, um Fehldetektionen zu verhindern. Mit anderen Worten ist es das Ziel, dass das Auftreten von dynamischen Veränderungen, die zu kurzzeitig voneinander abweichenden physikalischen Werten an den Positionen der redundanten Sensoren führen, nicht als Offset zwischen den beiden Sensoren gewertet wird. Es ist daher für eine besonders zuverlässige Offset-Fehler Detektion bevorzugt, in Schritt 408 zu überprüfen, ob das erste und das weitere Analysesignal hinreichend stationär sind, d.h., dass die dynamischen Änderungen in der Anlage relativ klein sind.

Wie bereits beschrieben, ist ein Analysesignal in Form einer Standardabweichung ein Maß für die Streuung der Daten bzw. ein Maß für die Stationarität der Daten, also des entsprechenden Sensorsignals. Um sicherzustellen, dass bei der weiteren Bestimmung eines Offset-Fehlers nur hinreichend stationäre Analysesignale verwendet werden, kann das erste Analysesignal $x_1(t_k)$ und das weitere Analysesignal $x_2(t_k)$ mit mindestens einem (vorgegeben) Grenzwert $std_{lim}$ verglichen werden. Folgender Vergleich kann in Schritt 408 durchgeführt werden:

$$x_1(t_k) < std_{lim}$$

$$x_2(t_k) < std_{lim} \tag{10}$$

Ist das Vergleichsergebnis von (10) positiv, dann kann mit Schritt 410 fortgefahren werden. Insbesondere kann dann in Abhängigkeit der Analysesignale die Differenz (=mittlere Abweichung $\Delta m$) zwischen den Sensorsignalen bestimmt werden. Bei einem negativen Vergleichsergebnis von (10) kann der Vorgang insbesondere so lange unterbrochen werden, bis die Überprüfung hinreichend positiv ausfällt.

In Schritt 410 kann die mittlere Abweichung $\Delta m$, insbesondere der Betrag der mittleren Abweichung $\Delta m$, der Messwerte m der Sensorsignale bestimmt werden. Dabei kann der in Schritt 406 bestimmte Korrekturwert $\Delta m_{correction}$ berücksichtig werden. Vorzugsweise kann in Schritt 412 folgende Berechnung von der Verarbeitungseinrichtung durchgeführt werden:

$$\Delta m = \left| m_{f,2}(t_k) - m_{f,1}(t_k) + \Delta m_{correction} \right|. \tag{11}$$

Die Vergleichseinrichtung kann in Schritt 412 die in Schritt 410 bestimmte mittlere Abweichung $\Delta m$, insbesondere den Betrag der mittleren Abweichung $\Delta m$, mit einer zulässigen Abweichung vergleichen. Vorzugsweise kann die Abweichung $\Delta m$ vorab auf den Messbereich des Sensors skaliert werden. Folgende Vergleichsoperation kann durchgeführt werden:

$$\left| \frac{\Delta m}{Messbereich} \right| < off_{lim}. \tag{12}$$

Insbesondere wird gemäß (12) überprüft, ob die mittlere Abweichung $\Delta m$ innerhalb eines zulässigen Bereichs liegt, also einen (vorgegebenen) Grenzwert $off_{lim}$ nicht überschreitet. Abhängig vom Vergleichsergebnis wird insbesondere von der Auswerteeinrichtung bestimmt, ob ein fehlerhafter Sensor vorliegt. Wenn der Grenzwert $off_{lim}$ überschritten wird, d.h. die Abweichung zwischen den Sensorsignalen also in einem unzulässigen Bereich liegt, weist einer der zwei redundanten Sensoren einen Fehler, insbesondere einen Offset-Fehler auf.

Im nächsten Schritt 414 kann bei einem derartigen Vergleichsergebnis eine Warnung und/oder ein Alarm ausgegeben werden. Beispielsweise kann vorgesehen sein, dass zur Vermeidung eines Fehlalarms zunächst nur eine Warnung ausgegeben wird. Wird diese Warnung auf $repeat_{offset}$ aufeinanderfolgenden Abtastschritten wiederholt (wobei weiterhin der Prozess auf den jeweiligen Abtastschritten stationär sein sollte (10), kann ein Alarm über das Fehlverhalten des Sensorpaars erfolgen.

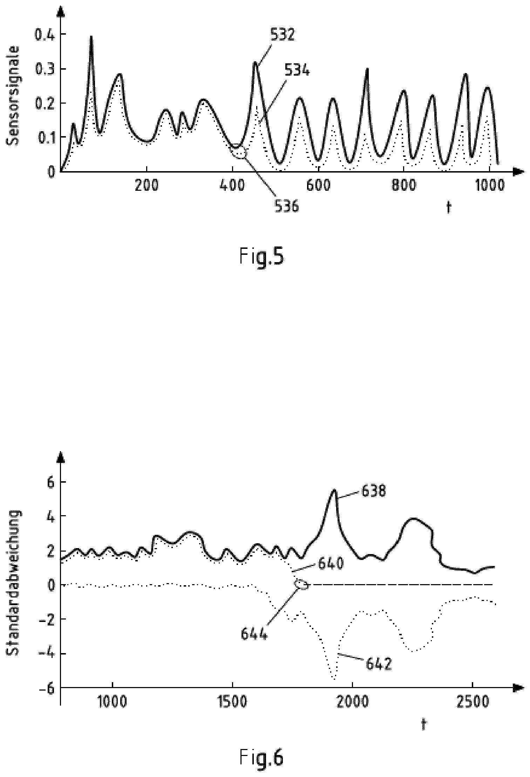

Die Figur 5 zeigt ein Diagramm mit einem bespielhaften Verlauf eines ersten Sensorsignals 532 und eines weiteren Sensorsignals 534. Mit dem Bezugszeichen 536 ist der Zeitpunkt gekennzeichnet, ab dem ein Offset-Fehler auftritt. Es versteht sich, dass es sich bei den gezeigten Verläufen um schematische Verläufe handelt.

Wie bereits beschrieben wurde, kann zusätzlich oder alternativ vorgesehen sein, dass durch das Verfahren ein Freezing-Fehler eines Sensors detektiert wird, indem abhängig von den in Schritt 404 erzeugten Analysesignalen eine Korrelation wie nachfolgend ausgeführt bestimmt wird. Insbesondere kann die Freezingberechnung über eine Auswertung der Kreuzkorrelationen der beiden Analysesignale erfolgen.

In Schritt 416 kann aus dem ersten Analysesignal $x_1(t_k)$ und dem weiteren Analysesignal $x_2(t_k)$ ein Differenzsignal $\Delta x$ bestimmt werden:

$$\Delta x = x_2(t_k) - x_1(t_k). \tag{13}$$

Wie bereits beschrieben wurde, ist vorliegend unter Freezing zu verstehen, dass das Sensorsignal von einem Sensor auf einem konstanten Wert eingefroren ist und somit seine Standardabweichung, also das Analysesignal, null wird.

Dann kann in Schritt 416 die Kreuzkorrelationen zwischen dem Differenzsignal $\Delta x$ und dem Analysesignal $x_1(t_k)$ von dem ersten Sensor und dem Differenzsignal $\Delta x$ und dem Analysesignal $x_2(t_k)$ von dem weiteren Sensor analysiert werden. Beispielsweise kann für die Analyse über einen Intervall p mit der Länge $n_{freeze}$ das jeweilige Analysesignal (9) gesammelt werden (z.B. 1.000 Messwerte). Wenn das Intervall p mit Datenpunkte des Analysesignals gefüllt ist, wird die Kreuzkorrelationen zwischen dem Differenzsignal $\Delta x$ und dem Analysesignal $x_1(t_k)$ berechnet.

Dies entspricht der Kovarianz $cov_{x1,\Delta x,p}$ zwischen dem Analysesignal $x_{1,p}$ und dem Differenzsignal $\Delta x_p$:

$$\mathrm{cov}_{x1,\Delta x,p} = \mathrm{cov}(x_{1,p}, \Delta x_p). \tag{14}$$

In entsprechender Weise kann die Kreuzkorrelationen zwischen dem Differenzsignal $\Delta x$ und dem Analysesignal $x_2(t_k)$ berechnet werden. Dies entspricht der Kovarianz $cov_{x2,\Delta x,p}$ zwischen dem Analysesignal $x_{2,p}$ und dem Differenzsignal $\Delta x_p$:

$$\mathrm{cov}_{x2,\Delta x,p} = \mathrm{cov}(x_{2,p}, \Delta x_p). \tag{15}$$

Nachfolgend wird eine detaillierte Möglichkeit zur Bestimmung der Kovarianz beschrieben. Die Kovarianz zwischen dem Differenzsignal $\Delta x$ und dem Analysesignal $x_1(t_k)$ kann wie folgt berechnet werden:

$$\mathrm{cov}_{x1,\Delta x,p} = \frac{1}{n_{freeze}-1} \sum_{i=1}^{n_{freeze}} (x_1(t_{k-i+1}) - \overline{x}_{1,p}) * (\Delta x(t_{k-i+1}) - \overline{x}_p). \tag{16}$$

Entsprechend kann die Kreuzkorrelationen zwischen dem Differenzsignal $\Delta x$ und dem Analysesignal $x_2(t_k)$ berechnet werden:

$$\mathrm{cov}_{x2,\Delta x,p} = \frac{1}{n_{freeze}-1} \sum_{i=1}^{n_{freeze}} (x_2(t_{k-i+1}) - \overline{x}_{2,p}) * (\Delta x(t_{k-i+1}) - \overline{x}_p). \tag{17}$$

Für die Berechnungen werden der Durchschnittswert $\overline{x}_{1,p}$ des ersten Analysesignals $x_1(t_k)$

$$\overline{x}_{1,p} = \frac{1}{n_{freeze}} \sum_{i=1}^{n_{freeze}} x_1(t_{k-i+1}) \tag{18}$$

der Durchschnittswert $\overline{x}_{2,p}$ des weiteren Analysesignals $x_2(t_k)$

$$\overline{x}_{2,p} = \frac{1}{n_{freeze}} \sum_{i=1}^{n_{freeze}} x_2(t_{k-i+1}) \tag{19}$$

und der Durchschnittswert $\overline{x}_p$ des Differenzsignals $\Delta x$

$$\overline{x}_p = \frac{1}{n_{freeze}} \sum_{i=1}^{n_{freeze}} \Delta x(t_{k-i+1}) \tag{20}$$

berechnet. Diese Berechnung kann ausgeführt werden, sobald das aktuelle Intervall mit $n_{freeze}$ Daten bzw. Messwerten gefüllt ist. Wenn das Intervall und die Freezingberechnung abgeschlossen sind, können die aktuellen Daten (des gegenwärtigen Zeitpunkts) für das nächste Intervall gesammelt werden bis wieder $n_{freeze}$ Daten vorliegen.

Anschließend wird in Schritt 416 als Korrelation das Verhältnis der beiden Kreuzkorrelationen $cov_{x1,\Delta x,p}$ und $cov_{x2,\Delta x,p}$ bestimmt. Das Verhältnis kann in einem Vergleichsschritt 418 mit einem zulässigen (vorgegebenen) Verhältnisbereich verglichen werden. Beispielsweise kann ein Grenzwert $ratio_{freezing,tol}$ (z. B. $ratio_{freezing,tol}$ = 1000) vorgegeben werden. Liegt das Verhältnis innerhalb des zulässigen Verhältnisbereichs, liegt kein Fehler vor. Andernfalls kann auf einen fehlerhaften Sensor geschlossen werden. Wenn ein Fehler vorliegt, kann insbesondere der defekte Sensor wie folgt identifiziert werden. Wenn

$$\left| \frac{\mathrm{COV}_{x1,\Delta x,p}}{\mathrm{COV}_{x2,\Delta x,p}} \right| > ratio_{freezing,tol} \qquad (21)$$

dann liegt das Verhältnis in einem weiteren unzulässigen Teilbereich. Der weitere Sensor ist defekt (eingefroren). Wenn

$$\left| \frac{\mathrm{COV}_{x2,\Delta x,p}}{\mathrm{COV}_{x1,\Delta x,p}} \right| > ratio_{freezing,tol} \qquad (22)$$

dann liegt das Verhältnis in einem ersten unzulässigen Teilbereich. Der erste Sensor ist defekt (eingefroren).

In diesen Fällen kann in Schritt 420 eine Warnung und/oder ein Alarm ausgegeben werden. Beispielsweise kann vorgesehen sein, dass zur Vermeidung eines Fehlalarms zunächst nur eine Warnung ausgegeben wird. Insbesondere kann, wenn (21) bzw. (22) erfüllt ist, eine Warnung für den jeweiligen Sensor ausgegeben werden. Wird diese Warnung auf (vorgebbaren) $repeat_{freezing}$ aufeinanderfolgenden Intervallen wiederholt, kann ein Alarm über das Fehlverhalten des identifizierten Sensors erfolgen.

Figur 6 zeigt ein Diagramm mit einem ersten beispielhaften Analysesignal 638, einem weiteren beispielhaften Analysesignal 640 und einem aus diesen Signalen 638, 640 resultierenden Differenzsignal 642. Mit Bezugszeichen 644 ist der Zeitpunkt dargestellt, ab dem der weitere Sensor eingefroren ist, das resultierende Analysesignal daher 0 ergibt. Wie zu erkennen ist, korreliert das Analysesignal des weiteren Signals mit dem Differenzsignal der Analysesignale. Hieraus kann abgeleitet werden, dass der erste Sensor eingefroren ist. Es versteht sich, dass es sich bei den gezeigten Verläufen um schematische Verläufe handelt.

Wie bereits beschrieben wurde, kann zusätzlich oder alternativ vorgesehen sein, dass durch das Verfahren ein Fouling-Fehler eines Sensors detektiert wird. Die Detektion eines Fouling-Fehlers kann ebenfalls über eine Auswertung der Kreuzkorrelationen der beiden Analysesignale erfolgen. Sie kann auf einer Maximierung der Kovarianz zwischen den Analysesignalen basieren. Die zuvor beschriebenen Analysesignale der zwei redundanten Sensoren können über einen Intervall q mit einer Länge ($n_{fouling}$ + $2^*z_{max}$) gespeichert werden. Insbesondere ist das Intervall q um die Daten $2^*z_{max}$ erweitert. $2^*z_{max}$ stellt vorliegend den Suchraum der unten vorgestellten Foulingberechnung dar. $n_{fouling}$ stellt vorliegend die Länge des eigentlichen Kerns des Intervalls q dar. Die Fouling-Analyse kann durchgeführt werden, sobald das Intervall q mit Daten gefüllt ist. Für die Foulingberechnung ist es wichtig, dass im Intervall q ein aussagekräftiger Datensatz vorliegt, der durch eine ausreichende Dynamik in den Daten gekennzeichnet ist. Daher muss der Kern des Intervalls $n_{fouling}$ hinreichend lang gewählt werden, so dass Zeitintervalle, in denen der Prozess stationär läuft, überbrückt werden könne. Die Länge $n_{fouling}$ des Kern des Intervalls kann als konstant gewählt werden. Alternativ kann die Länge $n_{fouling}$ auch variable gehalten werden. Hierbei kann die Länge über eine in Schritt 424 durchführbare optionale Berechnung derart berechnet werden, dass die Daten durch eine ausreichende Dynamik angeregt sind, um eine noch zuverlässigere Fouling-Fehler Detektion zu ermöglichen.

Insbesondere kann nach einer Erzeugung eines ersten Analysesignals und eines weiteren Analysesignals in Schritt 422 folgende Bestimmung durchgeführt werden:

Ziel der Bestimmung ist es insbesondere, dass sich in den beiden Analysesignalen jeweils Datenpunkte mit ausreichender Dynamik in dem Intervall befinden. Ein dynamischer Mess-Datenpunkt wird hier durch ein dynamisches Verhalten im Vergleich zu seinen benachbarten Mess-Datenpunkten charakterisiert, d.h., dass die erste Ableitung bezüglich der Zeit am betrachteten Datenpunkt nicht konstant ist, der Prozesswert bzw. Messwert also nicht mit einer konstanten Steigung ansteigt (oder absteigt) oder stationär ist. Die zweite Ableitung ist ein Maß, dass die erste Ableitung bezüglich der Zeit am betrachteten Datenpunkt konstant ist.

Die Bestimmung in Schritt 424 zur Intervalllängenberechnung untersucht insbesondere die zweite Ableitung eines Datenpunktes bzw. Messwerts bezüglich der Zeit. Hierbei wird das Signal des gefilterten Messwerts $m_{f,k}$ verwendet (6).

Für den Datenpunkt $m_{f,k}$ zum Zeitpunkt $t_k$ kann mit Hilfe der benachbarten Datenpunkte $m_{f,k-1}$ zum Zeitpunkt $t_{k-1}$, und $m_{f,k-2}$ zum Zeitpunkt $t_{k-2}$ die zweite Ableitung $\Delta^2 m_{f,k}$ mit Abtastzeit $T_{samp}$ berechnet werden:

$$\Delta^2 m_{f,k} = \frac{m_{f,k} - 2m_{f,k-1} + m_{f,k-2}}{T_{samp}^2} . \tag{23}$$

Die Datenpunkte, die die Bedingung für nicht-dynamisches Verhalten, z.B.:

$$\left|\Delta^2 m_{f,k}\right| < \varepsilon_{dyn} \tag{24}$$

erfüllen, können in der Datenmenge $n_{fouling,non-dyn}$ gesammelt werden. $\varepsilon_{dyn}$ ist eine kleine positive (vorgebbare) Toleranz ist, die vorliegend als Maß für dynamisches Verhalten dient.

$$n_{fouling,non-dyn}\left(\left|\Delta^2 m_{f,k}\right| < \varepsilon_{dyn}\right) \tag{25}$$

Die $n_{fouling,non-dyn}$ Datenpunkte im Intervall q sind für die Fouling-Detektion nicht besonders geeignet. Die Daten, die hinreichend dynamisch sind, Bedingung (24) also nicht erfüllen, werden in der Datenmenge $n_{fouling,dyn}$ gesammelt:

$$n_{fouling,dyn}\left(\left|\Delta^2 m_{f,k}\right| \geq \varepsilon_{dyn}\right). \tag{26}$$

Wenn nicht-dynamische Datenpunkte in einem Intervall q detektiert werden, kann die Länge $n_{fouling}$ des Kerns des Intervalls q derart vergrößert, dass die (vorgegebene) Dynamikbedingung von mindestens $n_{fouling,dyn,min}$ dynamischen Datenpunkte im Intervall q für mindestens einen Sensor enthalten sind. Vorzugsweise wird die Dynamikbedingung für beide Sensoren, wie in Formel (27) aufgeführt, verlangt.

$$n_{fouling} > \max(n_{fouling,non-dyn,s} + n_{fouling,dyn,min}). \tag{27}$$

Der Index s steht hierbei für den ersten Sensor bzw. den weiteren Sensor. Mit anderen Worten müssen ausreichend dynamische Datenpunkte bzw. Messwerte vorzugweise für beide Sensoren in dem Intervall q vorhanden sein.
In Schritt 426 kann dann von der Verarbeitungseinrichtung die Kreuzkorrelation zwischen den beiden Sensoren maximiert werden, indem das erste Analysesignal von dem ersten Sensor gengenüber dem weiteren Analysesignal des weiteren Sensors verschoben wird, derart, dass beide Analysesignale in Übereinstimmung gebracht werden.
Insbesondere kann die Maximierung der Kreuzkorrelation erzielt werden, indem die Kovarianz zwischen dem ersten Analysesignal und dem weiteren Analysesignal über dem Intervall q anhand der Verschiebung des weiteren Analysesignals maximiert wird. Die Verschiebung des weiteren Analysesignals kann über z Zeitschritte in negative oder positive Richtung erfolgen. Es kann die Kovarianz $cov_q$ im Intervall q mit Hilfe von z, wobei z ist die Anzahl der Zeitschritte ist, um die das weitere Analysesignal verschoben wird, als Freiheitsgrad maximiert werden. Die Verschiebung z kann um [-$z_{max}$, $z_{max}$] beschränkt sein. Im Intervall q wird die Kovarianz $cov_q$ mit Hilfe der Analysesignale berechnet:

$$\max_z cov_q$$

$$s.t. cov_q = \mathrm{cov}(x_1(t_{k-z_{max}}),...,x_1(t_{k-n_{fouling}+1-z_{max}}), x_2(t_{k-z_{max}+z}),...x_2(t_{k-n_{fouling}+1-z_{max}+z})) \tag{28}$$

$$z \in \left[-z_{max}, z_{max}\right].$$

Insbesondere kann die Maximierung für das erste Analysesignal $x_1$ und das weitere Analysesignal wie folgt erfolgen:

$$\max_{z} \text{cov}_q$$

$$s.t. \text{cov}_q = \frac{1}{n_{fouling} - 1} \sum_{i=1}^{n_{fouling}} (x_1(t_{k-i+1-z_{max}}) - \bar{x}_{1,q}) * (x_2(t_{k-i+1-z_{max}+z}) - \bar{x}_{2,q}) \qquad (29)$$

$$z \in [-z_{max}, z_{max}],$$

wobei

$$\bar{x}_{1,q} = \frac{1}{n_{fouling}} \sum_{i=1}^{n_{fouling}} x_1(t_{k-i+1-z_{max}}) \qquad (30)$$

und

$$\bar{x}_{2,q} = \frac{1}{n_{fouling}} \sum_{i=1}^{n_{fouling}} x_2(t_{k-i+1-z_{max}+z}). \qquad (31)$$

Aus der vorgenommen Verschiebung z, also der Anzahl z von Datenpunkten, mit denen das weitere Analysesignal $x_2$ vorschoben worden ist und der Abtastzeit $T_{sample}$, kann als Korrelationsbedingung die Foulingzeit $\tau$ bestimmt werden. Beispielsweise kann die Foulingzeit $\tau$ wie folgt berechnet werden:

$$\tau = T_{sample} * z. \qquad (32)$$

In einem Vergleichsschritt 428 kann diese Korrelationsbedingung mit einem zulässigen Foulingzeit-Bereich verglichen werden.

$$|\tau| > \tau_{warn} \qquad (33)$$

Abhängig vom Vergleichsergebnis wird bestimmt, ob ein fehlerhafter Sensor vorliegt. Wenn der Grenzwert $\tau_{warn}$ überschritten wird, die Korrelationsbedingung also in einem unzulässigen Bereich liegt, weist einer der zwei redundanten Sensoren einen Fehler, insbesondere einen Fouling-Fehler auf.
Im nächsten Schritt 430 kann eine Warnung und/oder ein Alarm ausgegeben werden. Beispielsweise kann vorgesehen sein, dass zur Vermeidung eines Fehlalarms zunächst nur eine Warnung ausgegeben wird. Wird diese Warnung auf (vorgebbare) repeat$_{fouling}$ aufeinanderfolgenden Intervallen wiederholt, kann ein Alarm über das Fehlverhalten des Sensorpaars erfolgen.

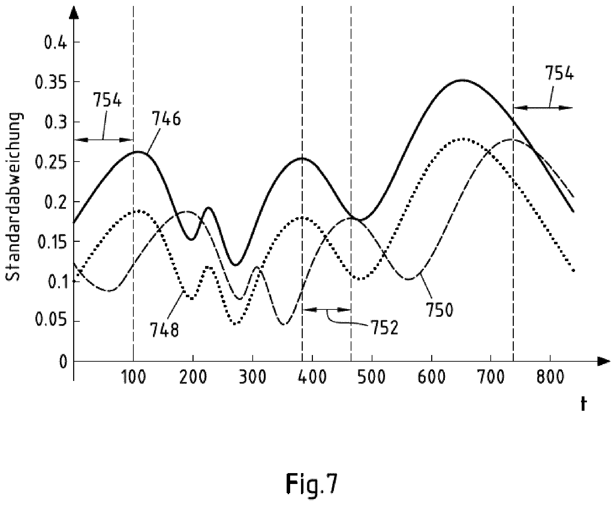

Die Figur 7 zeigt ein beispielhaftes Diagramm mit einem ersten Analysesignal 746, einem weiteren Analysesignal 750 und dem um 752 verschobenen Analysesignal 748. 752 ist hierbei die aus der Berechnung resultierende Zeitkonstante, die als Fouling-Zeit bezeichnet wird. Es versteht sich, dass es sich bei den gezeigten Verläufen um schematische Verläufe handelt. Mit dem Bezugszeichen 754 ist der Suchraum bezeichnet.

## Patentansprüche

1. Computer-implementiertes Verfahren zum Überwachen von mindestens zwei redundanten Sensoren (102.1, 102.2; 202.1, 202.2; 252.1, 252.2), die insbesondere in einer chemischen Anlage (100, 200) oder in einem Flugzeug (250) angeordnet sind, umfassend:

    a) Bereitstellen von einem ersten Sensorsignal eines ersten Sensors (102.1, 202.1, 252.1) der zwei redundanten Sensoren (102.1, 102.2; 202.1, 202.2; 252.1, 252.2), wobei das erste Sensorsignal mindestens einen Messwert umfasst,
    b) Bereitstellen von mindestens einem weiteren Sensorsignal von einem weiteren Sensor (102.2, 202.2, 252.2) der zwei redundanten Sensoren (102.1, 102.2; 202.1, 202.2; 251.1, 252.2), wobei das weitere Sensorsignal mindestens einen weiteren Messwert umfasst,

c) Erzeugen von mindestens einem ersten Analysesignal aus dem ersten Sensorsignal, wobei als erstes Analysesignal eine zweite Ableitung des ersten Sensorsignals erzeugt wird,

d) Erzeugen von mindestens einem weiteren Analysesignal aus dem weiteren Sensorsignal, wobei als weiteren Analysesignal eine zweite Ableitung des weiteren Sensorsignals erzeugt wird,

e) Selektion eines zeitlichen Horizonts für die Sensorsignale aus a), b) durch Vergleich der Analysesignalen aus c) und d) mit einem vordefinierten Grenzmaß für die Streuung, die Stationarität bzw. die Dynamik des Sensorsignals, wobei der zeitliche Horizont ermittelt wird, in dem eine Mindestanzahl an Datenpunkten vorliegt, die durch eine zweite zeitliche Ableitung charakterisiert sind, deren Betrag oberhalb eines vorgegebenen Dynamik Grenzwertes der zweiten Ableitung liegt,

f) Bestimmen von mindestens einer Korrelation zwischen dem ersten Analysesignal des ersten Sensors und dem Analysesignal des weiteren Sensors,

g) Vergleichen der Korrelation mit mindestens einem zulässigen Korrelationsbereich oder der Differenz mit einem zulässigen Differenzbereich, und

h) Bestimmen, ob von den zwei redundanten Sensoren (102.1, 102.2; 202.1, 202.2;252.1, 252.2) mindestens ein Sensor (102.1, 102.2; 202.1, 202.2; 252.1, 252.2) fehlerhaft ist abhängig von dem Vergleichsergebnis nach g),

i) Ausgeben der Bestimmung nach h).

2. Verfahren nach Anspruch 1, **dadurch gekennzeichnet, dass**

- im Schritt c) eine Standardabweichung des ersten Sensorsignals erzeugt wird, und
- im Schritt d) eine Standardabweichung des weiteren Sensorsignals erzeugt wird, und

im Schritt e) der Horizont ein bewegter Horizont ist, in dem die Standardabweichung des ersten Sensorsignals und die Standardabweichung des weiteren Sensorsignals jeweils für den gleichen Zeitraum bzw. für die gleichen Zeitpunkte eine vorgegebenen Stationaritätsgrenze nicht übersteigen, im Schritt f) die mittlere Abweichung zwischen dem mindestens einen Messwert des ersten Sensorsignals und des mindestens einen Messwerts des weiteren Sensorsignals bestimmt wird, und im Schritt g) die mittlere Abweichung mit einer zulässigen mittleren Abweichung verglichen wird.

3. Verfahren nach Anspruch 1, **dadurch gekennzeichnet, dass**

- im Schritt c) zusätzlich eine Standardabweichung des ersten Sensorsignals erzeugt wird, und
- im Schritt d) zusätzlich eine Standardabweichung des weiteren Sensorsignals erzeugt wird, und

Im Schritt f)
ein Differenzsignals aus der Standardabweichung des ersten Sensorsignals und der Standardabweichung des weiteren Sensorsignals bestimmt wird, dann

- eine erste Kreuzkorrelation zwischen dem bestimmten Differenzsignal und der Standardabweichung des ersten Sensorsignals bestimmt wird, und
- eine weitere Kreuzkorrelation zwischen dem bestimmten Differenzsignal und der Standardabweichung des weiteren Sensorsignals bestimmt wird,
- das Verhältnis der ersten Kreuzkorrelation und der weiteren Kreuzkorrelation bestimmt wird, und
- im Schritt g) das bestimmte Verhältnis mit einem zulässigen Verhältnisbereich verglichen wird.

4. Verfahren nach Anspruch 3, **dadurch gekennzeichnet, dass,** wenn das berechnete Verhältnis außerhalb des zuverlässigen Verhältnisbereichs liegt, der fehlerhafte Sensor, der Sensor mit dem kleineren Betrag der Kreuzkorrelation ist und eine entsprechende Mitteilung ausgegeben wird.

5. Verfahren nach Anspruch 1, **dadurch gekennzeichnet, dass:**

- im Schritt c) als weiteres Analysesignal des ersten Sensorsignals eine Standardabweichung des ersten Sensorsignals erzeugt wird, und
- im Schritt d) als weiteres Analysesignal des weiteren Sensorsignals eine Standardabweichung des weiteren Sensorsignals erzeugt wird, und
- im Schritt f) das Bestimmen einer Korrelation das Maximieren der Kreuzkorrelation zwischen die Standardabweichung des ersten Sensorsignals und die Standardabweichung des weiteren Sensorsignals umfasst.

6. Verfahren nach Anspruch 5, **dadurch gekennzeichnet, dass** die Kreuzkorrelation maximiert wird, indem die Kovarianz zwischen der Standardabweichung des ersten Sensorsignals 1 und die Standardabweichung des weiteren Sensorsignals über unterschiedliche Zeitverschiebungen ($\Delta$T) maximiert wird.

7. Verfahren nach Anspruch 6, **dadurch gekennzeichnet, dass**

- als Korrelation aus der vorgenommen Zeitverschiebung eine Foulingzeit bestimmt wird,
- die Foulingzeit mit einem zulässigen Foulingzeitbereich verglichen wird, und
- abhängig von dem Vergleichsergebnis bestimmt wird, ob ein fehlerhafter Sensor (102.1, 102.2; 202.1, 202.2; 252.1, 252.2) vorliegt.

8. Verfahren nach einem der vorherigen Ansprüche, **dadurch gekennzeichnet, dass**

- ein räumlicher Abstand zwischen dem ersten Sensor (102.1, 202.1, 252.1) und dem weiteren Sensor (102.2, 202.2, 252.2) bestimmt wird, und
- mindestens eines der bereitgestellten Sensorsignale abhängig von einer Volumenstrommessung und von dem räumlichen Abstand zwischen den Sensoren (102.1, 102.2; 202.1, 202.2; 252.1, 252.2) zeitlich bearbeitet wird.

9. Verfahren nach Anspruch 8, **dadurch gekennzeichnet, dass**

- das eines der bereitgestellten Sensorsignale mit einem Verzögerungselement von zumindest erster Ordnung abhängig von dem räumlichen Abstand zwischen dem ersten Sensor (102.1, 202.1, 252.1) und dem weiteren Sensor (102.2, 202.2, 252.2) zeitlich bearbeitet wird, und/oder
- das eines der bereitgestellten Sensorsignale mit einem Totzeitelement abhängig von der Volumenstrommessung und von dem räumlichen Abstand zwischen dem Sensor (102.1, 202.1, 252.1) und dem weiteren Sensor (102.2, 202.2, 252.2) zeitlich bearbeitet wird.

10. Verfahren nach einem der vorherigen Ansprüche, **dadurch gekennzeichnet, dass** vor dem Bestimmen des ersten Analysesignals und/oder des weiteren Analysesignals in einem Filterschritt mindestens eines der erfassten Sensorsignale gefiltert wird, derart, dass zumindest Messrauschen aus dem Sensorsignal herausgefiltert wird.

11. Überwachungseinrichtung (104, 204, 254, 304) zum Überwachen nach dem Verfahren gemäß Anspruch 1 von mindestens zwei redundanten Sensoren (102.1, 102.2; 202.1, 202.2; 252.1, 252.2), die insbesondere in einer chemischen Anlage (100, 200) oder in einem Flugzeug (250) angeordnet sind, umfassend:

- mindestens eine Empfangseinrichtung (314.1, 314.2) eingerichtet zum Empfangen von einem ersten Sensorsignal eines ersten Sensors (102.1, 202.1, 252.1) der zwei redundanten Sensoren (102.1, 102.2; 202.1, 202.2; 252.1, 252.2) und zum Empfangen von mindestens einem weiteren Sensorsignal von einem weiteren Sensor (102.2, 202.2, 252.2) der zwei redundanten Sensoren(102.1, 102.2; 202.1, 202.2; 252.1, 252.2),
- wobei das erste Sensorsignal mindestens einen Messwert und das weitere Sensorsignal mindestens einen Messwert umfasst,
- mindestens eine Verarbeitungseinrichtung (316) eingerichtet zum Erzeugen von einem ersten Analysesignal aus dem ersten Sensorsignal und zum Erzeugen von mindestens einem weiteren Analysesignal aus dem weiteren Sensorsignal,
- wobei die Verarbeitungseinrichtung (316) zum Bestimmen von mindestens einer Korrelationsbedingung zwischen dem ersten Sensorsignal und dem weiteren Sensorsignal zumindest in Abhängigkeit des ersten Analysesignals und des weiteren Analysesignals eingerichtet ist,
- mindestens eine Vergleichseinrichtung (318) eingerichtet zum Vergleichen der Korrelationsbedingung mit mindestens einem zulässigen Korrelationsbereich, und
- mindestens eine Auswerteeinrichtung (320) eingerichtet zum Bestimmen, ob mindestens ein Sensor (102.1, 102.2; 202.1, 202.2; 252.1, 252.2) fehlerhaft ist abhängig von dem Vergleichsergebnis.

12. Chemische Anlage (100, 200), umfassend:

- mindestens zwei redundante Sensoren (102.1, 102.2, 202.1, 202.2), und
- mindestens eine Überwachungseinrichtung (104, 204, 304) nach Anspruch 11.

**13.** Flugzeug (250), umfassend:

- mindestens zwei redundante Sensoren (252.1, 252.2), und
- mindestens eine Überwachungseinrichtung (254, 304) nach Anspruch 11.

**Claims**

**1.** Computer-implemented method for monitoring at least two redundant sensors (102.1, 102.2; 202.1, 202.2; 252.1, 252.2), which are in particular arranged in a chemical plant (100, 200) or in an aircraft (250), comprising:

a) providing a first sensor signal of a first sensor (102.1, 202.1, 252.1) of the two redundant sensors (102.1, 102.2; 202.1, 202.2; 252.1, 252.2), the first sensor signal comprising at least one measured value,
b) providing at least one further sensor signal from a further sensor (102.2, 202.2, 252.2) of the two redundant sensors (102.1, 102.2; 202.1, 202.2; 251.1, 252.2), the further sensor signal comprising at least one further measured value,
c) generating at least one first analysis signal from the first sensor signal, a second derivative of the first sensor signal being generated as the first analysis signal,
d) generating at least one further analysis signal from the further sensor signal, a second derivative of the further sensor signal being generated as the further analysis signal,
e) selecting a time horizon for the sensor signals from a), b) by comparison of the analysis signals from c) and d) with the predefined limit for the variance, stationarity and dynamics of the sensor signal, the time horizon in which there are a minimum number of data points being ascertained, **characterized by** a second time derivative, the absolute value of which lies above a specified dynamics limit value of the second derivative,
f) determining at least one correlation between the first analysis signal of the first sensor and the analysis signal of the further sensor,
g) comparing the correlation with at least one admissible correlation range or the difference with an admissible difference range, and
h) depending on the result of the comparison according to g), determining whether at least one sensor (102.1, 102.2; 202.1, 202.2; 252.1, 252.2) of the two redundant sensors (102.1, 102.2; 202.1, 202.2;252.1, 252.2) is faulty,
i) issuing the determination according to h).

**2.** Method according to Claim 1, **characterized in that**

- in step c), a standard deviation of the first sensor signal is generated, and
- in step d), a standard deviation of the further sensor signal is generated, and
- in step e), the horizon is a moving horizon, **in that** the standard deviation of the first sensor signal and the standard deviation of the further sensor signal respectively do not exceed a specified stationarity limit for the same period of time or for the same points in time, in step f), the average deviation between the at least one measured value of the first sensor signal and the at least one measured value of the further sensor signal is determined, and, in step g), the average deviation is compared with an admissible average deviation.

**3.** Method according to Claim 1, **characterized in that**

- in step c), a standard deviation of the first sensor signal is additionally generated, and
- in step d), a standard deviation of the further sensor signal is additionally generated, and
- in step f), a difference signal is determined from the standard deviation of the first sensor signal and the standard deviation of the further sensor signal, then
- a first crosscorrelation between the determined difference signal and the standard deviation of the first sensor signal is determined, and
- a further crosscorrelation between the determined difference signal and the standard deviation of the further sensor signal is determined,
- the ratio of the first crosscorrelation and the further crosscorrelation is determined, and
- in step g), the determined ratio is compared with an admissible ratio range.

**4.** Method according to Claim 3, **characterized in that,** if the calculated ratio lies outside the admissible ratio range, the faulty sensor is the sensor with the smaller absolute value of the crosscorrelation and a corresponding notification is issued.

5. Method according to Claim 1, **characterized in that:**

- in step c), a standard deviation of the first sensor signal is generated as a further analysis signal of the first sensor signal, and
- in step d), a standard deviation of the further sensor signal is generated as a further analysis signal of the further sensor signal, and
- in step f), the determination of a correlation comprises maximizing the crosscorrelation between the standard deviation of the first sensor signal and the standard deviation of the further sensor signal.

6. Method according to Claim 5, **characterized in that** the crosscorrelation is maximized by maximizing the covariance between the standard deviation of the first sensor signal 1 and the standard deviation of the further sensor signal by way of different time displacements ($\Delta$T).

7. Method according to Claim 6, **characterized in that**

- a fouling time is determined as the correlation from the time displacement performed,
- the fouling time is compared with an admissible fouling time range, and
- depending on the result of the comparison, it is determined whether there is a faulty sensor (102.1, 102.2; 202.1, 202.2; 252.1, 252.2).

8. Method according to one of the preceding claims, **characterized in that**

- a spatial distance between the first sensor (102.1, 202.1, 252.1) and the further sensor (102.2, 202.2, 252.2) is determined, and
- depending on a volumetric flow measurement and on the spatial distance between the sensors (102.1, 102.2; 202.1, 202.2; 252.1, 252.2), at least one of the sensor signals provided is processed on a time basis.

9. Method according to Claim 8, **characterized in that**

- depending on the spatial distance between the first sensor (102.1, 202.1, 252.1) and the further sensor (102.2, 202.2, 252.2), one of the sensor signals provided is processed on a time basis by a delay element of at least the first order, and/or
- depending on the volumetric flow measurement and on the spatial distance between the sensor (102.1, 202.1, 252.1) and the further sensor (102.2, 202.2, 252.2), one of the sensor signals provided is processed on a time basis by a dead time element.

10. Method according to one of the preceding claims, **characterized in that,** before the determination of the first analysis signal and/or of the further analysis signal, at least one of the recorded sensor signals is filtered in a filtering step in such a way that at least measuring noise is filtered out from the sensor signal.

11. Monitoring device (104, 204, 254, 304) for monitoring by the method according to Claim 1 at least two redundant sensors (102.1, 102.2; 202.1, 202.2; 252.1, 252.2), which are in particular arranged in a chemical plant (100, 200) or in an aircraft (250), comprising:

- at least one receiving device (314.1, 314.2) designed for receiving a first sensor signal of a first sensor (102.1, 202.1, 252.1) of the two redundant sensors (102.1, 102.2; 202.1, 202.2; 252.1, 252.2) and for receiving at least one further sensor signal from a further sensor (102.2, 202.2, 252.2) of the two redundant sensors (102.1, 102.2; 202.1, 202.2; 252.1, 252.2),
- the first sensor signal comprising at least one measured value and the further sensor signal comprising at least one measured value,
- at least one processing device (316) designed for generating a first analysis signal from the first sensor signal and for generating at least one further analysis signal from the further sensor signal,
- the processing device (316) being designed for determining at least one correlation condition between the first sensor signal and the further sensor signal at least in dependence on the first analysis signal and the further analysis signal,
- at least one comparing device (318) designed for comparing the correlation condition with at least one admissible correlation range, and

- at least one evaluation device (320) designed for determining whether, depending on the result of the comparison, at least one sensor (102.1, 102.2; 202.1, 202.2; 252.1, 252.2) is faulty.

**12.** Chemical plant (100, 200), comprising:

- at least two redundant sensors (102.1, 102.2, 202.1, 202.2), and
- at least one monitoring device (104, 204, 304) according to Claim 11.

**13.** Aircraft (250), comprising:

- at least two redundant sensors (252.1, 252.2), and
- at least one monitoring device (254, 304) according to Claim 11.

## Revendications

**1.** Procédé mis en oeuvre par ordinateur pour surveiller au moins deux capteurs (102.1, 102.2 ; 202.1, 202.2 ; 252.1, 252.2) redondants qui sont notamment disposés dans une installation chimique (100, 200) ou dans un aéronef (250), comprenant :

a) fourniture d'un premier signal de capteur d'un premier capteur (102.1, 202.1, 252.1) des deux capteurs (102.1, 102.2 ; 202.1, 202.2 ; 252.1, 252.2) redondants, le premier signal de capteur comprenant au moins une première valeur mesurée,

b) fourniture d'au moins un signal de capteur supplémentaire d'un capteur supplémentaire (102.2, 202.2, 252.2) des deux capteurs (102.1, 102.2 ; 202.1, 202.2 ; 252.1, 251.2) redondants, le signal de capteur supplémentaire comprenant au moins une valeur mesurée supplémentaire,

c) génération d'au moins un premier signal d'analyse à partir du premier signal de capteur, une deuxième dérivée du premier signal de capteur étant générée en tant que premier signal d'analyse,

d) génération d'au moins un signal d'analyse supplémentaire à partir du signal de capteur supplémentaire, une deuxième dérivée du signal de capteur supplémentaire étant générée en tant que signal d'analyse supplémentaire,

e) sélection d'un horizon temporel pour les signaux de capteur issus de a) et b) par comparaison des signaux d'analyse issus de c) et d) avec une valeur limite prédéfinie pour la dispersion, le caractère stationnaire ou la dynamique du signal de capteur, l'horizon temporel étant déterminé en ce qu'il existe un nombre minimal de points de données qui sont **caractérisés par** une deuxième dérivée temporelle dont la valeur absolue est supérieure à une valeur limite dynamique prédéfinie de la deuxième dérivée,

f) détermination d'au moins une corrélation entre le premier signal d'analyse du premier capteur et le signal d'analyse du capteur supplémentaire,

g) comparaison de la corrélation avec au moins une plage de corrélation admissible ou de la différence avec une plage de différence admissible, et

h) détermination du fait de savoir si, parmi les deux capteurs (102.1, 102.2 ; 202.1, 202.2 ; 252.1, 252.2) redondants, au moins un capteur (102.1, 102.2 ; 202.1, 202.2 ; 252.1, 252.2) est défaillant en fonction du résultat de la comparaison selon g),

i) délivrance en sortie de la détermination selon h).

**2.** Procédé selon la revendication 1, **caractérisé en ce que**

- à l'étape c), un écart-type du premier signal de capteur est généré, et
- à l'étape d), un écart-type du signal de capteur supplémentaire est généré, et
- à l'étape e), l'horizon est un horizon déplacé dans lequel l'écart-type du premier signal de capteur et l'écart-type du signal de capteur supplémentaire ne dépassent respectivement pas une limite de caractère stationnaire pendant la même période ou pendant les mêmes instants, à l'étape f) l'écart moyen est déterminé entre l'au moins une valeur mesurée du premier signal de capteur et l'au moins une valeur mesurée du signal de capteur supplémentaire, et à l'étape g) l'écart moyen est comparé avec un écart moyen admissible.

**3.** Procédé selon la revendication 1, **caractérisé en ce que**

- à l'étape c), un écart-type du premier signal de capteur est en plus généré, et
- à l'étape d), un écart-type du signal de capteur supplémentaire est en plus généré, et
- à l'étape f)
un signal de différence résultant de l'écart-type du premier signal de capteur et de l'écart-type du signal de capteur supplémentaire est déterminé, puis
- une première corrélation croisée entre le signal de différence déterminé et l'écart-type du premier signal de capteur est déterminée, et
- une corrélation croisée supplémentaire entre le signal de différence déterminé et l'écart-type du signal de capteur supplémentaire est déterminée,
- le rapport entre la première corrélation croisée et la corrélation croisée supplémentaire est déterminé, et
- à l'étape g), le rapport déterminé est comparé avec une plage de rapport admissible.

4. Procédé selon la revendication 3, **caractérisé en ce que** lorsque le rapport calculé se trouve en-dehors de la plage de rapport admissible, le capteur défaillant, le capteur ayant la valeur absolue de corrélation croisée la plus faible et un message correspondant sont délivrés en sortie.

5. Procédé selon la revendication 1, **caractérisé en ce que**

- à l'étape c), un écart-type du premier signal de capteur est généré en tant que signal d'analyse supplémentaire du premier signal de capteur, et
- à l'étape d), un écart-type du signal de capteur supplémentaire est généré en tant que signal d'analyse supplémentaire du signal de capteur supplémentaire, et
- à l'étape f), la détermination d'une corrélation comprend la maximisation de la corrélation croisée entre l'écart-type du premier signal de capteur et l'écart-type du signal de capteur supplémentaire.

6. Procédé selon la revendication 5, **caractérisé en ce que** la corrélation croisée devient maximale **en ce que** la covariance entre l'écart-type du premier signal de capteur 1 et l'écart-type du signal de capteur supplémentaire est maximisée sur différents décalages dans le temps ($\Delta t$).

7. Procédé selon la revendication 6, **caractérisé en ce que**

- un temps d'encrassement est déterminé en tant que corrélation à partir du décalage dans le temps effectué,
- le temps d'encrassement est comparé avec une plage de temps d'encrassement admissible, et
- la présence ou non d'un capteur (102.1, 102.2 ; 202.1, 202.2 ; 252.1, 252.2) défectueux est déterminée en fonction du résultat de la comparaison.

8. Procédé selon l'une des revendications précédentes, **caractérisé en ce que**

- un écart dans l'espace entre le premier capteur (102.1, 202.1, 252.1) et le capteur supplémentaire (102.2, 202.2, 252.2) est déterminé, et
- au moins l'un des signaux de capteur fournis est traité dans le temps en fonction d'une mesure du débit volumique et de l'écart dans l'espace entre les capteurs (102.1, 102.2 ; 202.1, 202.2 ; 252.1, 252.2).

9. Procédé selon la revendication 8, **caractérisé en ce que**

- l'un des signaux de capteur fournis est traité dans le temps avec un élément de retard d'au moins le premier ordre en fonction de l'écart dans l'espace entre le premier capteur (102.1, 202.1, 252.1) et le capteur supplémentaire (102.2, 202.2, 252.2), et/ou
- l'un des signaux de capteur fournis est traité dans le temps avec un élément de temps mort en fonction d'une mesure du débite volumique et de l'écart dans l'espace entre le premier capteur (102.1, 202.1, 252.1) et le capteur supplémentaire (102.2, 202.2, 252.2).

10. Procédé selon l'une des revendications précédentes, **caractérisé en ce qu'**avant la détermination du premier signal d'analyse et/ou du signal d'analyse supplémentaire, dans une étape de filtrage, au moins l'un des signaux de capteur acquis est filtré de telle sorte qu'au moins les bruits de mesure sont éliminés par filtrage du signal de capteur.

11. Dispositif de surveillance (104, 204, 254, 304) destiné à la surveillance conformément au procédé selon la revendication 1 d'au moins deux capteurs (102.1, 102.2 ; 202.1, 202.2 ; 252.1, 252.2) redondants qui sont notamment disposés dans une installation chimique (100, 200) ou dans un aéronef (250), comprenant :

- au moins un dispositif de réception (314.1, 314.2) conçu pour recevoir un premier signal de capteur d'un premier capteur (102.1, 202.1, 252.1) des deux capteurs (102.1, 102.2 ; 202.1, 202.2 ; 252.1, 252.2) redondants et pour recevoir au moins un signal de capteur supplémentaire d'un capteur supplémentaire (102.2, 202.2, 252.2) des deux capteurs (102.1, 102.2 ; 202.1, 202.2 ; 252.1, 252.2) redondants,
- le premier signal de capteur comprenant au moins une valeur mesurée et le signal de capteur supplémentaire comprenant au moins une valeur mesurée supplémentaire,
- au moins un dispositif de traitement (316) conçu pour générer un premier signal d'analyse à partir du premier signal de capteur et pour générer au moins un signal d'analyse supplémentaire à partir du signal de capteur supplémentaire,
- le dispositif de traitement (316) étant conçu pour déterminer au moins une condition de corrélation entre le premier signal de capteur et le signal de capteur supplémentaire au moins en fonction du premier signal d'analyse et du signal d'analyse supplémentaire,
- au moins un dispositif de comparaison (318) conçu pour comparer la condition de corrélation avec au moins une plage de corrélation admissible, et
- au moins un dispositif d'interprétation (320) conçu pour déterminer si au moins un capteur (102.1, 102.2 ; 202.1, 202.2 ; 252.1, 252.2) est défaillant en fonction du résultat de la comparaison.

12. Installation chimique (100, 200), comprenant :

- au moins deux capteurs (102.1, 102.2, 202.1, 202.2) redondants, et
- au moins un dispositif de surveillance (104, 204, 304) selon la revendication 11.

13. Aéronef (250), comprenant :

- au moins deux capteurs (252.1, 252.2) redondants, et
- au moins un dispositif de surveillance (254, 304) selon la revendication 11.

EP 3 390 967 B1

Fig.1

Fig.2

Fig. 2a

250

252.1

252.2

258

254

258

260

EP 3 390 967 B1

Fig.3

Fig.4

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10242128 A1